# EUROPEAN PATENT APPLICATION

(11) **EP 4 796 962 A1**
(43) Date of publication of application: **26.08.2026**
(21) Application number: 24879759.9
(22) Date of filing: 17.10.2024
(51) Int. Cl.: G02B 5/20, F21S 2/00, G02B 5/02, G02B 5/04, G02F 1/13357, G09F 9/00, F21Y 115/10

(54) **WAVELENGTH CONVERSION SHEET, AND BACKLIGHT AND LIQUID CRYSTAL DISPLAY DEVICE USING SAME**

(30) Priority: 20.10.2023 JP 2023180809; 20.10.2023 JP 2023180811; 20.10.2023 JP 2023180815
(71) Applicant: Dai Nippon Printing Co., Ltd., Tokyo 162-8001 (JP)
(72) Inventor: SAKAMOTO, Takeshi, Tokyo 162-8001 (JP); TAMURA, Shuichi, Tokyo 162-8001 (JP); MORIMOTO, Taro, Tokyo 162-8001 (JP)
(74) Representative: Beck Greener LLP
(86) International application number: PCT/JP2024/036914
(87) International publication number: WO 2025/084338

(57) **Abstract**

Provided is a wavelength conversion sheet that can suppress the occurrence of curling. A wavelength conversion sheet including: a first quantum dot protective film; a quantum dot-containing layer; and a second quantum dot protective film in presented order, wherein the first quantum dot protective film includes at least a first primer layer, a first base material, and a first barrier layer, the second quantum dot protective film includes at least a second primer layer, a second base material, and a second barrier layer, the first primer layer and the second primer layer are each in contact with the quantum dot-containing layer, AD2 < AD1 is satisfied, wherein AD1 is defined as an adhesive force between the first quantum dot protective film and the quantum dot-containing layer and AD2 is defined as an adhesive force between the second quantum dot protective film and the quantum dot-containing layer, and T1/T3 is 1.20 or more, wherein T1 is defined as a total thickness of the first quantum dot protective film and T3 is defined as a thickness of the quantum dot-containing layer.

## Description

### Technical Field

The present disclosure relates to a wavelength conversion sheet, and a backlight and a liquid crystal display device using the same.

### Background Art

With the development of a personal computer, the demand for a liquid crystal display device has been increasing. Recently, the penetration rate of a home-use liquid crystal display television has been increasing, and further, a smartphone and a tablet terminal have also been becoming widespread. Because of these, the present situation is that the market for a liquid crystal display device is expanding further.

The liquid crystal display device generally has a color filter, a liquid crystal cell, and a backlight. In the liquid crystal display device, the intensity of light is controlled by the shutter function of the liquid crystal layer in a liquid crystal cell, and the color of each pixel is displayed by dividing the color into the three primary colors of R, G, and B by the color filters. In this manner, the liquid crystal display device displays an image.

Conventionally, a cold cathode tube has been used as a light source of the backlight of the liquid crystal display device. However, in view of low power consumption and space saving, the light source of the backlight has been switched from the cold cathode tube to an LED.

As the LED used as a light source of a backlight, a white LED formed by combining a blue LED and a YAG-based yellow phosphor is widely used. The white LED has a broad spectral distribution of emission wavelength and is called pseudo-white.

On the other hand, in recent years, the development of a backlight using a quantum dot has also been promoted. The quantum dot refers to a nanometer-sized fine particle of a semiconductor.

The basic configuration of a backlight using a quantum dot is a combination of a light source that generates primary light such as a blue LED, which emits blue light, and a quantum dot.

The quantum dot is, for example, a nano-sized compound semiconductor fine particle composed of a semiconductor fine particle composed of a core which is CdSe and a shell which is ZnS, and a ligand which covers the periphery of the shell. The particle size of the quantum dot is smaller than the Bohr radius of an exciton of the compound semiconductor, and thus the quantum confinement effect appears. Because of this, the quantum dot has a higher light emission efficiency than the conventionally used phosphor using a rare earth ion as an activator, and can realize a high light emission efficiency of 90% or more.

The emission wavelength of the quantum dot depends on the bandgap energy of the quantized compound semiconductor fine particle, and thus an arbitrary emission wavelength can be obtained by changing the particle size of the quantum dot. A backlight that combines such a quantum dot with a blue LED or the like can realize high light emission efficiency and high color purity (for example, Patent Literatures 1 and 2).

In addition, the quantum dot is also used for lighting, a quantum dot laser, or the like, in addition to a backlight for a liquid crystal display device.

While the quantum dot has the above excellent characteristics, a problem thereof is that the quantum dot is easily degraded by the influence of moisture, oxygen, or the like. Because of this, it is preferable to protect the surfaces of both sides of a quantum dot-containing layer with a protective film including a barrier layer. For example, Patent Literatures 3 and 4 propose a wavelength conversion sheet in which surfaces of both sides of a quantum dot-containing layer are protected by a protective film.

### Citation List

### Patent Literature

PTL1: WO 2012/132239
PTL2: JP 2015-18131 A
PTL3: WO 2022/039013
PTL4: WO 2022/039015

### Summary of Invention

### Technical Problem

However, the wavelength conversion sheets of Patent Literatures 3 and 4 may suffer from the occurrence of curling. The wavelength conversion sheet with the occurrence of curling may cause lowered workability when being incorporated in a backlight. In addition, the wavelength conversion sheet with the occurrence of curling may undergo the generation of cracks in the barrier layer because of the curling.

In view of the above problem, it is an object of the present disclosure to provide a wavelength conversion sheet that can suppress the occurrence of curling. In addition, it is another object of the present disclosure to provide a backlight and liquid crystal display device using the wavelength conversion sheet.

### Solution to Problem

The present disclosure provides the following <A1> to <A3>.
<A1> A wavelength conversion sheet comprising: a first quantum dot protective film; a quantum dot-containing layer; and a second quantum dot protective film in presented order, wherein
   the first quantum dot protective film comprises at least a first primer layer, a first base material, and a first barrier layer,
   the second quantum dot protective film comprises at least a second primer layer, a second base material, and a second barrier layer,
   the first primer layer and the second primer layer are each in contact with the quantum dot-containing layer,
   AD2 < AD1 is satisfied, wherein AD1 is defined as an adhesive force between the first quantum dot protective film and the quantum dot-containing layer and AD2 is defined as an adhesive force between the second quantum dot protective film and the quantum dot-containing layer, and
   T1/T3 is 1.20 or more, wherein T1 is defined as a total thickness of the first quantum dot protective film and T3 is defined as a thickness of the quantum dot-containing layer.
<A2> A backlight comprising: at least one light source that emits primary light; an optical plate that is disposed adjacent to the light source and is for light guiding or diffusion; and a wavelength conversion sheet disposed on a light going-out side of the optical plate, wherein the wavelength conversion sheet is the wavelength conversion sheet according to <A1>.
<A3> A liquid crystal display device comprising: a backlight; and a liquid crystal panel, wherein the backlight is the backlight according to <A2>.

Furthermore, the present disclosure provides the following <B1> to <B3>.
<B1> A wavelength conversion sheet comprising: a first quantum dot protective film; a quantum dot-containing layer; and a second quantum dot protective film in presented order, wherein
   the first quantum dot protective film comprises at least a first primer layer, a first base material, and a first barrier layer,
   the second quantum dot protective film comprises at least a second primer layer, a second base material, and a second barrier layer,
   the first primer layer and the second primer layer are each in contact with the quantum dot-containing layer,
   AD2 < AD1 is satisfied, wherein AD1 is defined as an adhesive force between the first quantum dot protective film and the quantum dot-containing layer and AD2 is defined as an adhesive force between the second quantum dot protective film and the quantum dot-containing layer, and
   T2 < T1 is satisfied, wherein T1 is defined as a total thickness of the first quantum dot protective film and T2 is defined as a total thickness of the second quantum dot protective film.
<B2> A backlight comprising: at least one light source that emits primary light; an optical plate that is disposed adjacent to the light source and is for light guiding or diffusion; and a wavelength conversion sheet disposed on a light going-out side of the optical plate, wherein the wavelength conversion sheet is the wavelength conversion sheet according to <B1>.
<B3> A liquid crystal display device comprising a backlight and a liquid crystal panel, wherein the backlight is the backlight according to <B2>.

Furthermore, the present invention provides the following <C1> to <C3>.
<C1> A wavelength conversion sheet comprising: a first quantum dot protective film; a quantum dot-containing layer; and a second quantum dot protective film in presented order, wherein
   the first quantum dot protective film comprises at least a first primer layer, a first base material, and a first barrier layer,
   the second quantum dot protective film comprises at least a second primer layer, a second base material, and a second barrier layer,
   the first primer layer and the second primer layer are each in contact with the quantum dot-containing layer,
   AD2 < AD1 is satisfied, wherein AD1 is defined as an adhesive force between the first quantum dot protective film and the quantum dot-containing layer and AD2 is defined as an adhesive force between the second quantum dot protective film and the quantum dot-containing layer, and
   T1 is 20 µm or more and 120 µm or less, T1 + T2 + T3 is 60 µm or more and 150 µm or less, and T1/(T1 + T2 + T3) is more than 0.350, wherein T1 is defined as a total thickness of the first quantum dot protective film, T2 is defined as a total thickness of the second quantum dot protective film, and T3 is defined as a thickness of the quantum dot-containing layer.
<C2> A backlight comprising: at least one light source that emits primary light; an optical plate that is disposed adjacent to the light source and is for light guiding or diffusion; and a wavelength conversion sheet disposed on a light going-out side of the optical plate, wherein the wavelength conversion sheet is the wavelength conversion sheet according to <C1>.
<C3> A liquid crystal display device comprising a backlight and a liquid crystal panel, wherein the backlight is the backlight according to <C2>.

### Advantageous Effects of Invention

The wavelength conversion sheet of the present disclosure, and the backlight and liquid crystal display device using the wavelength conversion sheet of the present disclosure can suppress the curling of the wavelength conversion sheet.

### Brief Description of Drawings

[Fig. 1] Fig. 1 is a cross-sectional view showing one embodiment of the wavelength conversion sheet of the present disclosure.
[Fig. 2] Fig. 2 is a diagram for illustrating the state of curling.
[Fig. 3] Fig. 3 is a cross-sectional view showing one embodiment of the backlight of the present disclosure.
[Fig. 4] Fig. 4 is a cross-sectional view showing another embodiment of the backlight of the present disclosure.

### Description of Embodiments

Hereinafter, embodiments of the present disclosure will be described.

Herein, the expression "AA to BB" in relation to numerical values means AA or more and BB or less.

### [First embodiment]

### [Wavelength conversion sheet in first embodiment]

The wavelength conversion sheet in the first embodiment of the present disclosure is a wavelength conversion sheet comprising: a first quantum dot protective film; a quantum dot-containing layer; and a second quantum dot protective film in presented order, wherein
the first quantum dot protective film comprises at least a first primer layer, a first base material, and a first barrier layer,
the second quantum dot protective film comprises at least a second primer layer, a second base material, and a second barrier layer,
the first primer layer and the second primer layer are each in contact with the quantum dot-containing layer,
AD2 < AD1 is satisfied, wherein AD1 is defined as an adhesive force between the first quantum dot protective film and the quantum dot-containing layer and AD2 is defined as an adhesive force between the second quantum dot protective film and the quantum dot-containing layer, and
T1/T3 is 1.20 or more, wherein T1 is defined as a total thickness of the first quantum dot protective film and T3 is defined as a thickness of the quantum dot-containing layer.

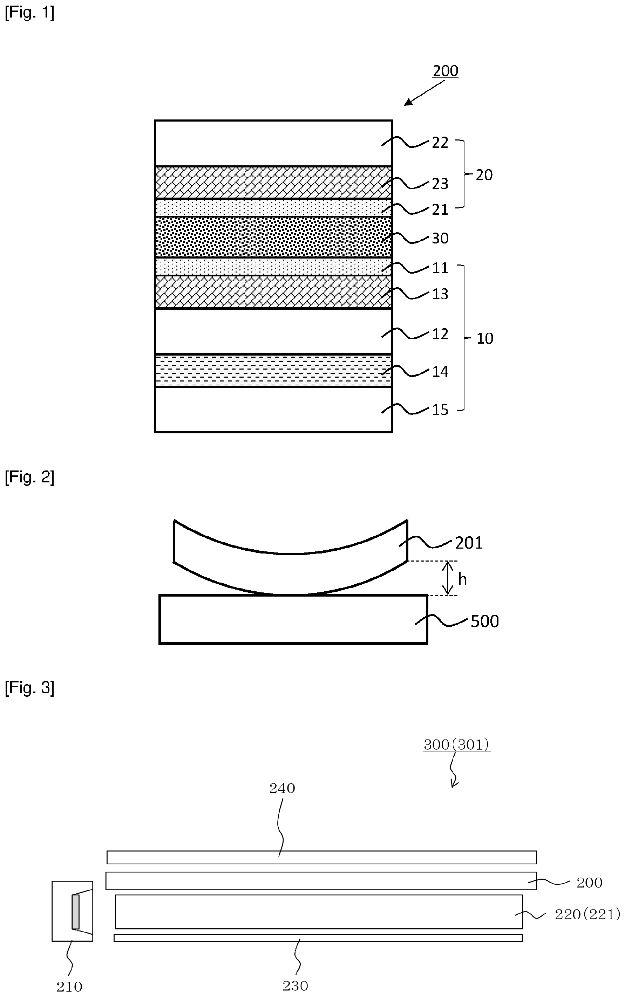

Fig. 1 is a cross-sectional view showing an embodiment of a wavelength conversion sheet 200 of the present disclosure. Fig. 1 is a diagram common to wavelength conversion sheets in the first, second, and third embodiments.

The wavelength conversion sheet 200 in Fig. 1 comprises: a first quantum dot protective film 10, a quantum dot-containing layer 30, and a second quantum dot protective film 20 in presented order. In Fig. 1, the first quantum dot protective film 10 comprises a first primer layer 11, a first barrier layer 13, and a first base material 12, and further comprises a first adhesive layer 14 and a first bulking base material 15. In Fig. 1, the second quantum dot protective film 20 comprises a second primer layer 21, a second barrier layer 23, and a second base material 22. In Fig. 1, the first primer layer 11 and the second primer layer 21 are each in contact with the quantum dot-containing layer 30.

Fig. 1 is a schematic cross-sectional view. It follows that Fig. 1 is such a schematization for easy illustration that the scale and others for layers constituting the wavelength conversion sheet 200 are different from actual ones. The same applies to other figures including Fig. 2.

The wavelength conversion sheet in the first embodiment of the present disclosure is not limited to the layer configuration in Fig. 1.

Fig. 2 is a diagram for illustrating the state of curling of the wavelength conversion sheet. Fig. 2 is a diagram common to wavelength conversion sheets in the first, second, and third embodiments. In Fig. 2, the wavelength conversion sheet has a curled shape with both edges lifted.

The degree of curling of the wavelength conversion sheet 200 is determined through procedures of X1 to X4 shown below. The procedures of X1 to X4 are those common to wavelength conversion sheets in the first, second, and third embodiment.
X1: The wavelength conversion sheet is cut to prepare a sample 201 of 100 mm × 100 mm in size.
X2: The sample 201 is placed on a horizontal stage 500 in such a manner that a surface on the first quantum dot protective film side faces the stage 500. For each of the four corners of the sample 201, the height of lifting from the horizontal stage 500, h, is measured. The mean of the first and second largest heights of the four heights, Ave1, is calculated. As the value of Ave1 is larger, it can be said that the degree of curling that forms a convex on the first quantum dot protective film side is higher.
X3: The sample 201 is placed on a horizontal stage 500 in such a manner that a surface on the second quantum dot protective film side faces the stage 500. For each of the four corners of the sample 201, the height of lifting from the horizontal stage 500, h, is measured. The mean of the first and second largest heights of the four heights, Ave2, is calculated. As the value of Ave2 is larger, it can be said that the degree of curling that forms a convex on the second quantum dot protective film side is higher.
X4: As Ave1 and Ave2 are both smaller, it can be said that the curling of the wavelength conversion sheet has been successfully suppressed.

As the larger of Ave1 and Ave2 is defined as Ave (max), Ave (max) is preferably 10.0 mm or less, more preferably 8.0 mm or less, and further preferably 5.0 mm or less. When Ave1 and Ave2 are each 10.0 mm or less, it is possible to more easily incorporate the wavelength conversion sheet in a backlight and liquid crystal display device. By setting Ave1 and Ave2 to 10.0 mm or less, the occurrence of a crack in the first barrier layer and second barrier layer can be easily suppressed. As can be understood from the description so far, "suppressing curling" is not limited to completely eliminating curling in the present specification, and the concept encompasses reducing the degree of curling. The description in the present paragraph is one common to the first, second, and third embodiments.

The wavelength conversion sheet in the first embodiment of the present disclosure needs to satisfy the following configurations A1 to A3.

### <Configuration A1>

The first primer layer and the second primer layer are each in contact with the quantum dot-containing layer.

### <Configuration A2>

AD2 < AD1 is satisfied, wherein AD1 is defined as the adhesive force between the first quantum dot protective film and the quantum dot-containing layer and AD2 is defined as the adhesive force between the second quantum dot protective film and the quantum dot-containing layer.

### <Configuration A3>

T1/T3 is 1.20 or more, wherein T1 is defined as the total thickness of the first quantum dot protective film and T3 is defined as the thickness of the quantum dot-containing layer.

The following explains the technical significances of configurations A1 to A3.

Configuration A1 makes it possible to easily improve the close adhesion between the first quantum dot protective film and the quantum dot-containing layer and the close adhesion between the second quantum dot protective film and the quantum dot-containing layer.

Even if slight curling has occurred in the wavelength conversion sheet, the occurrence of interface separation in the interface between the quantum dot-containing layer and the first quantum dot protective film and in the interface between the quantum dot-containing layer and the second quantum dot protective film can be easily suppressed by satisfying configuration A1.

Configuration A2 can be a cause for the occurrence of curling in the wavelength conversion sheet. However, the wavelength conversion sheet of the present disclosure can suppress curling by virtue of configuration A3.

First, why configuration A2 can be a cause for the occurrence of curling in the wavelength conversion sheet will be explained.

Quantum dot-containing layers normally include quantum dots and a binder resin. Additionally, they normally contain a cured product of a curable resin composition as the binder resin for improved durability. Thus, quantum dot-containing layers normally contain a cured product of a curable resin composition. In the production of the wavelength conversion sheet, the quantum dot-containing layer shrinks because of the curing of the curable resin composition. Then, if configuration A2 is satisfied, the stress generated through the shrinkage of the quantum dot-containing layer tends to more readily propagate to the first quantum dot protective film than to the second quantum dot protective film. Accordingly, satisfying configuration A2 allows the wavelength conversion sheet to tend to undergo the occurrence of curling that forms a convex on the first quantum dot protective film side.

AD1 and AD2 are expected to come to satisfy the relationship of configuration A2 through the production process for the wavelength conversion sheet.

The wavelength conversion sheet, which comprises a first quantum dot protective film, a quantum dot-containing layer, and a second quantum dot protective film in presented order, is normally produced through steps (1) to (4) shown below. If production is performed through steps (1) to (4) shown below, a coating liquid for quantum dot-containing layer formation more permeates the first primer layer, but less permeates the second primer layer. For this reason, production through the following steps (1) to (4) tends to give the relationship of AD2 < AD1.
(1) A first quantum dot protective film and a second quantum dot protective film are each produced.
(2) A coating liquid for quantum dot-containing layer formation is applied onto the first primer layer of the first quantum dot protective film to form a quantum dot-containing layer.
(3) The surface of the second quantum dot protective film on the second primer layer side is attached on the quantum dot-containing layer to give an in-process product of the wavelength conversion sheet comprising the first quantum dot protective film, the quantum dot-containing layer, and the second quantum dot protective film in presented order.
(4) The quantum dot-containing layer of the in-process product is irradiated with an ultraviolet ray.

The ranges of AD1, AD2, and AD1/AD2 are not particularly limited, but preferably within ranges shown below. AD1 and AD2 are measured by a method described in Examples. AD1 is preferably 2.0 N/25 mm or more and 20.0 N/25 mm or less, more preferably 3.0 N/25 mm or more and 18.0 N/25 mm or less, and further preferably 5.0 N/25 mm or more and 16.0 N/25 mm or less. AD2 is preferably 1.5 N/25 mm or more and 20 N/25 mm or less, more preferably 2.0 N/25 mm or more and 18.0 N/25 mm or less, and further preferably 3.0 N/25 mm or more and 16.0 N/25 mm or less. AD1/AD2 is preferably 1.1 or more and 5.0 or less, more preferably 1.2 or more and 4.0 or less, further preferably 1.3 or more and 3.0 or less, and further preferably 1.5 or more and 2.5 or less. The description in the present paragraph is one common to the first, second, and third embodiments.

Next, the reason why curling can be suppressed with configuration A3 will be explained.

Normally, protective films identical in layer configuration and thickness are used for the first quantum dot protective film and the second quantum dot protective film. The present inventors have found out that if protective films identical in layer configuration and thickness are used with configuration A2 satisfied, the resulting wavelength conversion sheet is likely to undergo the occurrence of curling that forms a convex on the first quantum dot protective film side. In addition, the present inventors have found out that setting the total thickness of the first quantum dot protective film, T1, to a value sufficiently larger than the thickness of the quantum dot-containing layer, T3, makes it possible to easily hinder the propagation of stress to the first quantum dot protective film side, and the curling of the wavelength conversion sheet can be suppressed. Specifically, the present inventors have found out that the curling of the wavelength conversion sheet can be suppressed by setting T1/T3 to 1.20 or more.

An object of the wavelength conversion sheet in the first embodiment of the present disclosure is to suppress the occurrence of curling.

Because setting T1/T3 to a value that is not excessively large prevents T1 from being excessively large and T3 from being excessively small, it becomes possible to easily achieve thinness for the wavelength conversion sheet and to easily allow the quantum dot-containing layer to include a specific amount of quantum dots therein. Accordingly, T1/T3 is preferably 1.25 or more and 5.00 or less, more preferably 1.30 or more and 4.50 or less, more preferably 1.40 or more and 4.00 or less, and further preferably 1.70 or more and 3.50 or less.

T1, T3, and T1 - T3 are preferably within the following ranges.

T1 is preferably 50 µm or more and 140 µm or less, more preferably 60 µm or more and 130 µm or less, and further preferably 70 µm or more and 120 µm or less. Setting T1 to 50 µm or more makes it possible to more easily suppress the curling of the wavelength conversion sheet. Setting T1 to 140 µm or less makes it possible to easily achieve thinness for the wavelength conversion sheet.

T3 is preferably 15 µm or more and 60 µm or less, more preferably 25 µm or more and 55 µm or less, and further preferably 30 µm or more and 50 µm or less.

Setting T3 to 15 µm or more makes it possible to easily allow the quantum dot-containing layer to include a specific amount of quantum dots. Setting T3 to 60 µm or less makes it possible to easily achieve thinness for the wavelength conversion sheet and to easily suppress stress to be generated through the shrinkage of the quantum dot-containing layer, thus making it possible to more easily suppress the curling of the wavelength conversion sheet.

T1 - T3 is preferably 10 µm or more and 100 µm or less, more preferably 20 µm or more and 90 µm or less, and further preferably 30 µm or more and 80 µm or less. Because setting T1 - T3 within the range prevents T1 and T3 from being excessively large or excessive small, it becomes possible to more easily suppress the curling of the wavelength conversion sheet, to easily achieve thinness for the wavelength conversion sheet, and to easily allow the quantum dot-containing layer to include a specific amount of quantum dots.

As the total thickness of base materials among the layers constituting the first protective film is defined as T1', T1' is preferably 50 µm or more and 140 µm or less, more preferably 60 µm or more and 130 µm or less, and further preferably 70 µm or more and 120 µm or less. Setting T1' within the range makes it possible to more easily suppress the curling of the wavelength conversion sheet and to easily achieve thinness for the wavelength conversion sheet.

T1'/T3 is preferably 1.20 or more, more preferably 1.25 or more and 5.00 or less, more preferably 1.30 or more and 4.50 or less, more preferably 1.40 or more and 4.00 or less, and more preferably 1.70 or more and 3.50 or less. Because setting T1'/T3 within the range prevents T1' and T3 from excessively large or excessively small, it becomes possible to more easily suppress the curling of the wavelength conversion sheet, and to easily achieve thinness for the wavelength conversion sheet, and to easily allow the quantum dot-containing layer to include a specific amount of quantum dots.

Examples of base materials to constitute the first protective film include a first base material, a first bulking base material, and a protective base material for the first barrier layer. The base materials to constitute the first protective film are preferably constituted with two base materials of a first base material and a first bulking base material or two base materials of a first base material and a protective base material for the first barrier layer, and more preferably constituted with two base materials of a first base material and a first bulking base material. The first base material, first bulking base material, and protective base material for the first barrier layer are preferably each a biaxially stretched resin film.

Examples of base materials to constitute the second protective film include a second base material, a second bulking base material, and a protective base material for the second barrier layer. The base material to constitute the second protective film is preferably constituted with one base material of a second base material. The second base material, second bulking base material, and protective base material for the second barrier layer are preferably each a biaxially stretched resin film.

As the total thickness of the second quantum dot protective film is defined as T2, the wavelength conversion sheet preferably satisfies T2 ≤ T3.

Satisfying the relationship of T2 ≤ T3 makes it possible to easily achieve thinness for the wavelength conversion sheet and to easily allow the quantum dot-containing layer to include a specific amount of quantum dots.

T2 and T3/T2 are preferably within the following ranges.

T2 is preferably 8 µm or more and 58 µm or less, more preferably 10 µm or more and 53 µm or less, and further preferably 12 µm or more and 48 µm or less. Setting T2 to 8 µm or more makes it possible to easily allow the wavelength conversion sheet to have improved handleability. Setting T2 to 140 µm or less makes it possible to easily achieve thinness for the wavelength conversion sheet.

T3/T2 is preferably 0.8 or more and 5 or less, more preferably 1.5 or more and 4.5 or less, and further preferably 2 or more and 4 or less. Because setting T3/T2 within the range prevents T3 and T2 from being excessively large or excessively small, it becomes possible to more easily suppress the curling of the wavelength conversion sheet, to easily achieve thinness for the wavelength conversion sheet, and to easily allow the quantum dot-containing layer to include a specific amount of quantum dots.

Herein, the thickness of each layer constituting the wavelength conversion sheet is calculated by photographing a cross section using a scanning electron microscope (SEM), measuring the thicknesses at four points from an image of the cross section, and averaging the values at the four points. The description in the present paragraph is one common to the first, second, and third embodiments.

Herein, measurements and evaluations including measurement of curling, measurement of adhesive force, measurement of the thicknesses of layers are carried out in a room atmosphere at a temperature of 23°C ± 5°C and a relative humidity of 40% or more and 65% or less, unless otherwise specified. Furthermore, samples are exposed to that atmosphere for 30 minutes or more and 60 minutes or less before carrying out any of the measurements and evaluations. The description in the present paragraph is one common to the first, second, and third embodiments.

When a plurality of upper limit options and a plurality of lower limit options of a numerical value are indicated for a constitutional requirement shown herein, a range given by combining one selected from the upper limit options and one selected from the lower limit options is shown as an embodiment. The description in the present paragraph is one common to the first, second, and third embodiments.

For the range of T1 in the first embodiment, examples of embodiments thereof include 50 µm or more and 140 µm or less, 50 µm or more and 130 µm or less, 50 µm or more and 120 µm or less, 60 µm or more and 140 µm or less, 60 µm or more and 130 µm or less, 60 µm or more and 120 µm or less, 70 µm or more and 140 µm or less, 70 µm or more and 130 µm or less, and 70 µm or more and 120 µm or less.

### <Protective film>

The wavelength conversion sheet in the first embodiment of the present disclosure comprises a first quantum dot protective film and a second quantum dot protective film.

Herein, the "first quantum dot protective film" and the "second quantum dot protective film" are occasionally abbreviated as the "first protective film" and the "second protective film", respectively.

### <<First protective film>>

The first protective film comprises at least a first primer layer, a first base material, and a first barrier layer. The first protective film may have a layer other than the first primer layer, the first base material, and the first barrier layer. Examples of the layer other than the first primer layer, the first base material, and the first barrier layer include a first adhesive layer, a first bulking base material, a protective base material for the first barrier layer, and a first anti-sticking layer.

Examples of the lamination configuration of the first protective film in the first embodiment include 1-1 to 1-12 shown below. "/" indicates an interface between adjacent layers.
1-1: first primer layer/first base material/first barrier layer
1-2: first primer layer/first barrier layer/first base material
1-3: first primer layer/first base material/first barrier layer/first adhesive layer/first bulking base material
1-4: first primer layer/first barrier layer/first base material/first adhesive layer/first bulking base material
1-5: first primer layer/first base material/first barrier layer/first adhesive layer/protective base material for first barrier layer
1-6: first primer layer/first barrier layer/first base material/first adhesive layer/protective base material for first barrier layer
1-7: first primer layer/first base material/first barrier layer/first anti-sticking layer
1-8: first primer layer/first barrier layer/first base material/first anti-sticking layer
1-9: first primer layer/first base material/first barrier layer/first adhesive layer/first bulking base material/first anti-sticking layer
1-10: first primer layer/first barrier layer/first base material/first adhesive layer/first bulking base material/first anti-sticking layer
1-11: first primer layer/first base material/first barrier layer/first adhesive layer/protective base material for first barrier layer/first anti-sticking layer
1-12: first primer layer/first barrier layer/first base material/first adhesive layer/protective base material for first barrier layer/first anti-sticking layer

The first protective film preferably comprises a first bulking base material in view of more easily setting T1/T3 to 1.20 or more.

In the first protective film, the first bulking base material is preferably disposed farther from the first primer layer than the first base material and the first barrier layer. The first bulking base material is preferably formed over the first base material or the first barrier layer with a first adhesive layer intervening therebetween. Forming the first bulking base material over the first base material or the first barrier layer with a first adhesive layer intervening therebetween allows the first adhesive layer to relax stress in the quantum dot-containing layer, making it possible to more easily suppress curling.

The first protective film preferably comprises a protective base material for the first barrier layer in view of more easily setting T1/T3 to 1.20 or more.

In the first protective film, the protective base material for the first barrier layer is preferably disposed farther from the first primer layer than the first base material and the first barrier layer. The protective base material for the first barrier layer is preferably formed over the first base material or the first barrier layer with a first adhesive layer intervening therebetween. The protective base material for the first barrier layer and the first adhesive layer are preferably formed to be peelable from the first base material or the first barrier layer. Forming the protective base material for the first barrier layer over the first base material or the first barrier layer with a first adhesive layer intervening therebetween allows the first adhesive layer to relax stress in the quantum dot-containing layer, making it possible to more easily suppress curling.

### <<Second protective film>>

The second protective film comprises at least a second primer layer, a second base material, and a second barrier layer. The second protective film may have a layer other than the second primer layer, the second base material, and the second barrier layer. Examples of the layer other than the second primer layer, the second base material, and the second barrier layer include a second adhesive layer, a second bulking base material, a protective base material for the second barrier layer, and a second anti-sticking layer.

Examples of the lamination configuration of the second protective film in the first embodiment include 2-1 to 2-12 shown below. "/" indicates an interface between adjacent layers.
2-1: second primer layer/second base material/second barrier layer
2-2: second primer layer/second barrier layer/second base material
2-3: second primer layer/second base material/second barrier layer/second adhesive layer/second bulking base material
2-4: second primer layer/second barrier layer/second base material/second adhesive layer/second bulking base material
2-5: second primer layer/second base material/second barrier layer/second adhesive layer/protective base material for second barrier layer
2-6: second primer layer/second barrier layer/second base material/second adhesive layer/protective base material for second barrier layer
2-7: second primer layer/second base material/second barrier layer/second anti-sticking layer
2-8: second primer layer/second barrier layer/second base material/second anti-sticking layer
2-9: second primer layer/second base material/second barrier layer/second adhesive layer/second bulking base material/second anti-sticking layer
2-10: second primer layer/second barrier layer/second base material/second adhesive layer/second bulking base material/second anti-sticking layer
2-11: second primer layer/second base material/second barrier layer/second adhesive layer/protective base material for second barrier layer/second anti-sticking layer
2-12: second primer layer/second barrier layer/second base material/second adhesive layer/protective base material for second barrier layer/second anti-sticking layer

The second protective film preferably comprises neither a second bulking base material nor a protective base material for the second barrier layer in view of easily achieving thinness for the wavelength conversion sheet.

In the wavelength conversion sheet, the layers constituting the first protective film and the layers constituting the second protective film may be symmetrically or asymmetrically disposed with respect to the quantum dot-containing layer. In an example in which the lamination configuration of the first protective film is the 1-1 and the lamination configuration of the second protective film is the 2-1, the layers constituting the first protective film and the layers constituting the second protective film are symmetrically disposed with respect to the quantum dot-containing layer. In another example in which the lamination configuration of the first protective film is the 1-2 and the lamination configuration of the second protective film is the 2-1, the layers constituting the first protective film and the layers constituting the second protective film are asymmetrically disposed with respect to the quantum dot-containing layer. The description in the present paragraph is one common to the first, second, and third embodiments.

In view of easily achieving thinness for the wavelength conversion sheet, the first protective film and the second protective film are preferably used as any combination of the following (1) to (3).
(1) The first protective film comprises a first primer layer, a first base material, a first barrier layer, and a first bulking base material. The second protective film comprises a second primer layer, a second base material, and a second barrier layer, and comprises neither a second bulking base material nor a protective base material for the second barrier layer.
(2) The first protective film comprises a first primer layer, a first base material, a first barrier layer, and a protective base material for the first barrier layer. The second protective film comprises a second primer layer, a second base material, and a second barrier layer, and comprises neither a second bulking base material nor a protective base material for the second barrier layer.
(3) The first protective film comprises a first primer layer, a first base material, and a first barrier layer, and comprises neither a first bulking base material nor a protective base material for the first barrier layer. The second protective film comprises a second primer layer, a second base material, and a second barrier layer, and comprises neither a second bulking base material nor a protective base material for the second barrier layer.

The lamination configuration of the first protective film and that of the second protective film may be the same. For example, the lamination configuration of the first protective film and that of the second protective film may be 1-1 and 2-1 above, respectively. Use of the same lamination configuration for the first protective film and the second protective film makes it possible to easily stabilize the physical properties of the wavelength conversion sheet over time.

### - Base material -

Hereinafter, the simple expression "the base material" means "any of the first base material and the second base material".

For the base material, a resin film that does not impair a function of the wavelength conversion sheet is preferably used. Examples of the base material include resin films including one or more resins selected from the group consisting of polyester, triacetyl cellulose, cellulose diacetate, cellulose acetate butyrate, polyamide, polyimide, polyethersulfone, polysulfone, polypropylene, polymethylpentene, polyvinyl chloride, polyvinyl acetal, polyether ketone, acrylic, polycarbonate, polyurethane, an amorphous olefin, and the like. Among these resin films, a monoaxially or biaxially stretched resin film is preferable, and a biaxially stretched resin film is more preferable, in view of suppression of curling, mechanical strength, dimensional stability, and heat resistance. The stretched resin film is preferably a polyester film. Examples of the polyester film include a polyethylene terephthalate film and a polyethylene naphthalate film. The description in the present paragraph is one common to the first, second, and third embodiments.

The thickness of the base material is preferably 5 µm or more, more preferably 8 µm or more, and further preferably 10 µm or more. The thickness of the base material is preferably 60 µm or less, more preferably 50 µm or less, and further preferably 30 µm or less. The description in the present paragraph is one common to the first, second, and third embodiments.

In the first embodiment, the thickness of the first base material and that of the second base material are preferably the same in view of easily stabilizing the physical properties of the wavelength conversion sheet over time.

### - Bulking base material -

Hereinafter, the simple expression "the bulking base material" means "any of the first bulking base material and the second bulking base material".

While a protective base material for the barrier layer, which is described later, is a base material that is peeled off after the production of the wavelength conversion sheet, the bulking base material is a base material that remains as a constituent member of the wavelength conversion sheet even after the production of the wavelength conversion sheet. The description in the present paragraph is one common to the first, second, and third embodiments.

For the bulking base material, a resin film that does not impair a function of the wavelength conversion sheet is preferably used. Examples of the bulking base material include resin films including one or more resins selected from the group consisting of polyester, triacetyl cellulose, cellulose diacetate, cellulose acetate butyrate, polyamide, polyimide, polyethersulfone, polysulfone, polypropylene, polymethylpentene, polyvinyl chloride, polyvinyl acetal, polyether ketone, acrylic, polycarbonate, polyurethane, an amorphous olefin, and the like. Among these resin films, a monoaxially or biaxially stretched resin film is preferable, and a biaxially stretched resin film is more preferable, in view of suppression of curling, mechanical strength, dimensional stability, and heat resistance. The stretched resin film is preferably a polyester film. Examples of the polyester film include a polyethylene terephthalate film and a polyethylene naphthalate film. The description in the present paragraph is one common to the first, second, and third embodiments.

The first protective film preferably comprises a first bulking base material in view of more easily setting T1/T3 to 1.20 or more.

The second protective film may have a second bulking base material. However, the second protective film preferably comprises no second bulking base material in view of easily achieving thinness for the wavelength conversion sheet.

The thickness of the bulking base material is preferably 10 µm or more, more preferably 20 µm or more, and further preferably 30 µm or more. Setting the thickness of the bulking base material to 10 µm or more makes it possible to more easily improve the handleability of the wavelength conversion sheet.

In view of thinning the wavelength conversion sheet, the thickness of the bulking base material is preferably 200 µm or less, more preferably 150 µm or less, more preferably 100 µm or less, and more preferably 75 µm or less.

The thickness of the first base material and the thickness of the first bulking base material preferably satisfy the relationship "thickness of first base material < thickness of first bulking base material". The thickness of the second base material and the thickness of the second bulking base material preferably satisfy the relationship "thickness of second base material < thickness of second bulking base material". Satisfying the relationships makes it possible to more easily improve the stiffness and strength of the wavelength conversion sheet in combination with improving the efficiency in forming the barrier layer on the base material. The description in the present paragraph is one common to the first, second, and third embodiments.

### - Protective base material for barrier layer -

Hereinafter, the simple expression "the protective base material for the barrier layer" means "any of the protective base material for the first barrier layer and the protective base material for the second barrier layer".

The protective base material for the barrier layer is a base material that is peeled off after the production of the wavelength conversion sheet. The protective base material for the barrier layer has a role of protecting the barrier layer and improving the handleability of the protective film in the production of the wavelength conversion sheet. The protective base material for the barrier layer is peeled off, for example, after the production of the wavelength conversion sheet and before incorporating the wavelength conversion sheet in a backlight. The description in the present paragraph is one common to the first, second, and third embodiments.

For the protective base material for the barrier layer, a resin film that does not impair a function of the wavelength conversion sheet is preferably used. Examples of the protective base material for the barrier layer include resin films including one or more resins selected from the group consisting of polyester, triacetyl cellulose, cellulose diacetate, cellulose acetate butyrate, polyamide, polyimide, polyethersulfone, polysulfone, polypropylene, polymethylpentene, polyvinyl chloride, polyvinyl acetal, polyether ketone, acrylic, polycarbonate, polyurethane, an amorphous olefin, and the like. Among these resin films, a monoaxially or biaxially stretched resin film is preferable, and a biaxially stretched resin film is more preferable, in view of suppression of curling, mechanical strength, dimensional stability, and heat resistance. The stretched resin film is preferably a polyester film. Examples of the polyester film include a polyethylene terephthalate film and a polyethylene naphthalate film. The description in the present paragraph is one common to the first, second, and third embodiments.

The first protective film preferably comprises a protective base material for the first barrier layer in view of more easily setting T1/T3 to 1.20 or more.

The second protective film may have a protective base material for the second barrier layer. However, the second protective film preferably comprises no protective base material for the second barrier layer in view of easily achieving thinness for the wavelength conversion sheet.

The thickness of the protective base material for the barrier layer is preferably 10 µm or more, more preferably 20 µm or more, and further preferably 30 µm or more. Setting the thickness of the protective base material for the barrier layer to 10 µm or more makes it possible to more easily improve the handleability of the wavelength conversion sheet.

The thickness of the protective base material for the barrier layer is preferably 150 µm or less, more preferably 100 µm or less, more preferably 75 µm or less, and more preferably 50 µm or less, in view of achieving thinness for the wavelength conversion sheet.

The thickness of the first base material and the thickness of the protective base material for the first barrier layer preferably satisfy the relationship "thickness of first base material < thickness of protective base material for first barrier layer". The thickness of the second base material and the thickness of the protective base material for the second barrier layer preferably satisfy the relationship "thickness of second base material < thickness of protective base material for second barrier layer". Satisfying the relationships makes it possible to more easily improve the handleability of the protective film in the production of the wavelength conversion sheet in combination with improving the efficiency in forming the barrier layer on the base material. The description in the present paragraph is one common to the first, second, and third embodiments.

The total light transmittance according to JIS K7361-1: 1997 of the base material, the bulking base material, and the protective base material for the barrier layer is preferably 80% or more, more preferably 85% or more, and further preferably 87% or more. Each of the base material, the bulking base material, and the protective base material for the barrier layer may be subjected to surface treatment or treatment for easy adherence in view of improving the close adhesion. The description in the present paragraph is one common to the first, second, and third embodiments.

### - Adhesive layer -

If the first protective film comprises a first bulking base material, the first bulking base material and the first base material or first barrier layer are preferably laminated through strong adhesion force with the first adhesive layer intervening therebetween. If the first protective film comprises a protective base material for the first barrier layer, the protective base material for the first barrier layer and the first base material or first barrier layer are preferably laminated in a peelable manner with the first adhesive layer intervening therebetween.

If the second protective film comprises a second bulking base material, the second bulking base material and the second base material or second barrier layer are preferably laminated through strong adhesion force with the second adhesive layer intervening therebetween. If the second protective film comprises a protective base material for the second barrier layer, the protective base material for the second barrier layer and the second base material or second barrier layer are preferably laminated in a peelable manner with the second adhesive layer intervening therebetween.

Hereinafter, the simple expression "the adhesive layer" means "any of the first adhesive layer and the second adhesive layer".

Herein, "peelable" for the protective base material for the barrier layer means that the peel strength of the protective base material for the barrier layer is 1.0 N/25 mm or less. The definition of being peelable presented here is one common to the first, second and third embodiments. A measurement method for the peel strength of the protective base material for the first barrier layer and a measurement method for the peel strength of the protective base material for the second barrier layer, the measurement methods given in the following, are ones common to the first, second, and third embodiments.

### <Measurement method for peel strength of protective base material for first barrier layer>

Three test pieces of 25 mm × 150 mm are cut out of the first quantum dot protective film. By using a tensile tester, peel strength in peeling the protective base material for the first barrier layer from the first quantum dot protective film is measured under measurement conditions shown below. If the protective base material for the first barrier layer has been laminated in a peelable manner with the first adhesive layer intervening therebetween, peel strength in peeling the protective base material for the first barrier layer and the first adhesive layer from the first quantum dot protective film is measured. The mean of measurements for the three test pieces is defined as the peel strength of the protective base material for the first barrier layer. The tensile tester is preferably one specified in JIS B7721: 2018.

### <Measurement conditions for peel strength>

- Temperature at measurement: 23°C
- Tensile speed: 300 mm/min
- Peel direction: 180°
- Chuck-to-chuck distance: 15 mm

### <Measurement method for peel strength of protective base material for second barrier layer>

The peel strength of the protective base material for the second barrier layer is measured in the same manner as in measuring the peel strength of the protective base material for the first barrier layer, except that three test pieces are cut out of the second quantum dot protective film.

Embodiments for the adhesive layer that are described below (embodiments of, for example, the adhesive to constitute the adhesive layer and the thickness of the adhesive layer) are ones common to adhesive layers in the first, second, and third embodiments.

Examples of the adhesive to constitute the adhesive layer include moisture-curable adhesives, thermosetting adhesives, ultraviolet-curable adhesives, and heat-sensitive adhesives (for example, hot-melt adhesives), pressure-sensitive adhesives. For those adhesives, versatile ones can be used.

In order to enable the protective base material for the barrier layer and the adhesive layer to be peeled from the base material or the barrier layer, it is preferable to use an adhesive layer with weak adhesion force for the adhesive layer, and it is more preferable to use a pressure-sensitive adhesive layer with weak adhesion force.

In view of keeping good close adhesion for a long period of time, the adhesive layer to laminate the bulking base material is preferably a layer formed of a curable adhesive. Examples of the curable adhesive include moisture-curable adhesives, thermosetting adhesives, and ultraviolet-curable adhesives, and among these thermosetting adhesives and ultraviolet-curable adhesives are preferable, and thermosetting adhesives are more preferable.

Examples of the thermosetting adhesive include versatile one-component curable adhesives and two-component curable adhesives. Among these, a two-component curable polyurethane-based adhesive is preferable. The two-component curable polyurethane-based adhesive is an adhesive including a polyol-based compound and an isocyanate-based compound.

The thickness of the adhesive layer is preferably 2 µm or more and 30 µm or less, more preferably 3 µm or more and 20 µm or less, and further preferably 4 µm or more and 10 µm or less.

### - Barrier layer -

The first protective film comprises a first barrier layer, and the second protective film comprises a second barrier layer.

The first barrier layer is preferably positioned between the first base material and the first primer layer. The second barrier layer is preferably positioned between the second base material and the second primer layer.

If the first protective film comprises a first bulking base material, the first barrier layer is preferably positioned between the first base material and the first bulking base material. If the first protective film comprises a protective base material for the first barrier layer, the first barrier layer is preferably positioned between the first base material and the protective base material for the first barrier layer. If the second protective film comprises a second bulking base material, the second barrier layer is preferably positioned between the second base material and the second bulking base material. If the second protective film comprises a protective base material for the second barrier layer, the second barrier layer is preferably positioned between the second base material and the protective base material for the second barrier layer.

Hereinafter, the simple expression "the barrier layer" means "any of the first barrier layer and the second barrier layer".

Embodiments for the barrier layer that are described below (embodiments of, for example, the layer configuration of the barrier layer, the material of an inorganic oxide layer, the thickness of an inorganic oxide layer, the material of a coating layer, and the thickness of a coating layer) are ones common to barrier layers in the first, second, and third embodiments.

Examples of the barrier layer include: a single layer of a single type selected from the group consisting of "an inorganic oxide layer formed by vapor-depositing an inorganic oxide," "a coating layer formed by applying a coating agent including a water-soluble polymer such as polyvinyl alcohol" and "a layer including a reaction product of a composition including a metal oxide and a phosphorus compound"; a layer obtained by laminating a single type selected from the above group; and a layer obtained by laminating two or more selected from the above group. Among these, a laminate of an inorganic oxide layer and a coating layer is preferable. That is, the first barrier layer and the second barrier layer preferably include an inorganic oxide layer and a coating layer.

Examples of the layer including a reaction product of a composition including a metal oxide and a phosphorus compound are disclosed in WO 2011/122036.

Hereinafter, embodiments of the inorganic oxide layer and the coating layer will be described.

If the first barrier layer on the first base material comprises an inorganic oxide layer and a coating layer, it is preferable that the first base material, the inorganic oxide layer, and the coating layer are presented in this order.

If the second barrier layer on the second base material comprises an inorganic oxide layer and a coating layer, it is preferable that the second base material, the inorganic oxide layer, and the coating layer are presented in this order.

In view of improving the barrier property, the barrier layer preferably comprises an inorganic oxide layer A, a coating layer A, an inorganic oxide layer B, and a coating layer B in presented order. If the barrier layer on the first base material has that configuration, it is preferable that the first base material, an inorganic oxide layer A, a coating layer A, an inorganic oxide layer B, and a coating layer B are presented in this order. If the barrier layer on the second base material has that configuration, it is preferable that the second base material, an inorganic oxide layer A, a coating layer A, an inorganic oxide layer B, and a coating layer B are presented in this order.

### - Inorganic oxide layer -

Examples of an inorganic oxide for the inorganic oxide layer include one or more selected from aluminum oxide, silicon oxide, and magnesium oxide. Aluminum oxide or silicon oxide is preferable in view of imparting a sufficient barrier property to the wavelength conversion sheet and for production efficiency of the wavelength conversion sheet. Aluminum oxide, which is excellent in transparency, is more preferable.

The inorganic oxide layer can be formed, for example, by a physical vapor deposition method (PVD method) such as a vacuum vapor deposition method, a sputtering method, and an ion plating method, or a chemical vapor deposition method (CVD method) such as a plasma chemical vapor deposition method, a thermochemical vapor deposition method, and a photochemical vapor deposition method. Among these, a vacuum vapor deposition method, which has good productivity due to high vapor deposition rates, is preferable. The PVD method is preferable in that the inorganic oxide layer is less likely to be contaminated with carbon than in the CVD method.

When the inorganic oxide layer includes silicon and oxygen, the content of the total of silicon and oxygen in each layer is preferably 80% by mass or more, more preferably 90% by mass or more, and further preferably 95% by mass or more on a mass basis. Examples of inorganic oxides containing silicon and oxygen include silicon oxide (SiOₓ) such as silicon dioxide.

When the inorganic oxide layer includes aluminum and oxygen, the content of the total of aluminum and oxygen in each layer is preferably 80% by mass or more, more preferably 90% by mass or more, and further preferably 95% by mass or more on a mass basis. Examples of inorganic oxides containing aluminum and oxygen include aluminum oxide (AlOₓ) such as Al₂O₃. As an inorganic oxide containing aluminum and oxygen, a small amount of aluminum hydroxide may be included as long as the aluminum hydroxide does not impair the effect of the present disclosure.

The preferable thickness of the inorganic oxide layer varies depending on the type of the inorganic oxide, and thus cannot be generalized.

When the inorganic oxide layer includes silicon and oxygen, the thickness of the inorganic oxide layer is preferably 15 nm or more, more preferably 20 nm or more, and further preferably 30 nm or more, in view of improving the barrier property.

When the inorganic oxide layer includes silicon and oxygen, the thickness of the inorganic oxide layer is preferably 200 nm or less, more preferably 150 nm or less, and further preferably 100 nm or less. By setting the thickness to 200 nm or less, the occurrence of a scratch and a crack in the inorganic oxide layer can be easily suppressed and the color derived from silicon oxide can be easily suppressed.

When the inorganic oxide layer includes aluminum and oxygen, the thickness of the inorganic oxide layer is preferably 6 nm or more, and more preferably 7 nm or more in order to improve the barrier property.

When the inorganic oxide layer includes aluminum and oxygen, the thickness of the inorganic oxide layer is preferably 25 nm or less, more preferably 20 nm or less, more preferably 15 nm or less, more preferably 12 nm or less, and more preferably 10 nm or less. By setting the thickness to 25 nm or less, the occurrence of a scratch and a crack in the inorganic oxide layer can be easily suppressed.

An anchor layer may be included between the inorganic oxide layer and the first base material or the second base material, for example, in view of improving the close adhesion.

### - Coating layer -

The coating layer preferably includes one or more selected from a water-soluble polymer and a metal alkoxide-based compound. The coating layer includes more preferably one or more selected from the group consisting of a water-soluble polymer, and further preferably one or more selected from the group consisting of a water-soluble polymer and one or more selected from the group consisting of a metal alkoxide-based compound, among a water-soluble polymer and a metal alkoxide-based compound.

When the barrier layer comprises the inorganic oxide layer and the coating layer, it is possible to more easily improve the barrier property of the wavelength conversion sheet.

Examples of the water-soluble polymer include polyvinyl alcohol, polyvinylpyrrolidone, and an ethylene-vinyl alcohol copolymer, and among these, polyvinyl alcohol and an ethylene-vinyl alcohol copolymer are preferable, and polyvinyl alcohol is more preferable, in view of the barrier property. That is, the coating layer includes preferably one or more selected from the group consisting of polyvinyl alcohol and an ethylene-vinyl alcohol copolymer, and more preferably polyvinyl alcohol.

When the coating layer contains a water-soluble polymer and a metal alkoxide-based compound, the content of the water-soluble polymer is preferably 5 parts by mass or more and 500 parts by mass or less, more preferably 7 parts by mass or more and 100 parts by mass or less, and further preferably 8 parts by mass or more and 50 parts by mass or less, per 100 parts by mass in total of the metal alkoxide-based compound.

Examples of the metal alkoxide-based compound include a metal alkoxide, a metal alkoxide hydrolysate, and a metal alkoxide polymer.

The metal alkoxide is a compound represented by the general formula M(OR)ₙ. In the formula, M represents a metal such as Si, Ti, Al, and Zr, and R represents an alkyl group such as a methyl group and an ethyl group. Specific examples of the metal alkoxide include tetramethoxysilane, tetraethoxysilane, and isopropoxyaluminum.

A coating layer can be formed, for example, by applying a coating liquid including a component constituting the coating layer on the inorganic oxide layer and drying the same. The coating liquid may contain an additive such as a silane coupling agent, a curing agent, or a dispersant.

The thickness of the coating layer is preferably 70 nm or more, more preferably 100 nm or more, and further preferably 150 nm or more in order to improve the barrier property.

The thickness of the coating layer is preferably 600 nm or less, more preferably 480 nm or less, more preferably 370 nm or less, and further preferably 300 nm or less. By setting the thickness to 600 nm or less, the wavelength conversion sheet can be thinned and the occurrence of a crack in the coating layer can be easily suppressed.

### - Primer layer -

In view of improving the close adhesion to the quantum dot-containing layer, the first protective film has a first primer layer. In view of improving the close adhesion to the quantum dot-containing layer, the second protective film has a second primer layer.

The first primer layer and the second primer layer each need to be in contact with the quantum dot-containing layer. In other words, the first primer layer needs to be positioned as the outermost layer on one side of the first protective film. The second primer layer needs to be positioned as the outermost layer on one side of the second protective film.

Hereinafter, the simple expression "the primer layer" means "any of the first primer layer and the second primer layer".

Embodiments for the primer layer that are described below (embodiments of, for example, the material of the primer layer and the thickness of the primer layer) are ones common to primer layers in the first, second, and third embodiments.

The primer layer preferably includes a resin component. Examples of the resin component include a polyester-based resin, a polyurethane-based resin, and an acrylic-based resin. Among these, a polyurethane-based resin is preferable, and a polyester polyurethane-based resin is more preferable. That is, the primer layer preferably includes a polyurethane-based resin, and more preferably includes a polyester polyurethane-based resin.

The polyurethane-based resin such as the polyester polyurethane-based resin can easily improve the close adhesion to the quantum dot-containing layer. The polyurethane-based resin such as the polyester polyurethane-based resin can also easily relax the stress generated when the quantum dot-containing layer is cured by ionizing radiation or by heat and suppress the propagation of stress to the first protective film and the second protective film.

Examples of the polyurethane-based resin include a reaction product of a one-component or two-component polyurethane-based resin composition obtained by reacting a polyfunctional isocyanate with a hydroxyl group-containing compound. For each of the polyfunctional isocyanate and the hydroxyl group-containing compound, only one type may be used, or a plurality thereof may be used.

Examples of the polyfunctional isocyanate include an aromatic polyisocyanate such as tolylene diisocyanate, diphenylmethane diisocyanate, xylylene diisocyanate, or polymethylene polyphenylene polyisocyanate, and an aliphatic polyisocyanate such as hexamethylene diisocyanate or isophorone diisocyanate.

Examples of the hydroxyl group-containing compound include a polyether polyol, a polyester polyol, a polyester polyurethane polyol, and a polyacrylate polyol. In the present disclosure, a polyester polyol is particularly preferable in view of close adhesion to the quantum dot-containing layer and durability. The reaction product of the polyester polyol and the polyfunctional isocyanate is a polyester polyurethane-based resin.

The content of the polyurethane-based resin is preferably 50% by mass or more, and more preferably 70% by mass or more based on the total amount of the primer layer.

In view of improving the durability, the primer layer is preferably a layer containing a cured product of a curable resin composition.

Examples of the cured product of a curable resin composition include a reaction product of a one-component or two-component polyurethane-based resin composition as described above.

The primer layer may contain a silane coupling agent. In the silane coupling agent, a functional group present at one end of the molecule thereof, such as a chloro group, an alkoxy group, or an acetoxy group, is hydrolyzed to form a silanol group (Si-OH), whereby the resin composition of the primer layer is modified with a covalent bond or the others to form a strong bond. In addition, an organic functional group present at the other end of the silane coupling agent, such as a vinyl group, a methacryloxy group, an amino group, an epoxy group, or a mercapto group, can easily improve the close adhesion between the primer layer and the quantum dot-containing layer.

Examples of the silane coupling agent include γ-chloropropyltrimethoxysilane, vinyltrichlorosilane, vinyltriethoxysilane, vinyl-tris(β-methoxyethoxy)silane, γ-methacryloxypropyltrimethoxysilane, β-(3,4-epoxycyclohexyl)ethyltrimethoxysilane, γ-glycidoxypropyltrimethoxysilane, vinyltriacetoxysilane, γ-mercaptopropyltrimethoxysilane, N-β(aminoethyl)-γ-aminopropyltrimethoxysilane, N-β(aminoethyl)-γ-aminopropylmethyldimethoxysilane, γ-ureidopropyltriethoxysilane, bis(β-hydroxyethyl)-γ-aminopropyltriethoxysilane, and γ-aminopropylsilicone, and one or two or more thereof can be used.

The content of the silane coupling agent is preferably 1% by mass or more, and more preferably 3% by mass or more based on the total amount of the primer layer. When the content of the silane coupling agent is in the above range, the close adhesion between the primer layer and the quantum dot-containing layer can be easily further improved.

For improving the extensibility of the primer layer and suppressing the occurrence of a crack in the primer layer, the content of the silane coupling agent is preferably 30% by mass or less, and more preferably 20% by mass or less based on the total amount of the primer layer.

The primer layer may further include a filler. The filler has the role of adjusting the viscosity or the like of a coating liquid for forming a primer layer to improve the coating suitability or the like. As the filler, for example, calcium carbonate, barium sulfate, alumina white, silica, talc, a glass frit, or a resin powder can be used.

The primer layer may further include an additive such as a stabilizer, a crosslinking agent, a lubricant, or an ultraviolet absorber, as necessary.

For the lower limit, the thickness of the primer layer is preferably 100 nm or more, more preferably 150 nm or more, and further preferably 200 nm or more, and the upper limit is preferably 500 nm or less, more preferably 400 nm or less, and further preferably 300 nm or less.

Setting the thickness to 100 nm or more makes it possible to more easily improve the close adhesion between the primer layer and the quantum dot-containing layer. Setting the thickness to 500 nm or less makes it possible to improve the brightness of a backlight using the wavelength conversion sheet by suppressing absorption of transmitted light by the primer layer.

### - Anti-sticking layer -

The first protective film may have a first anti-sticking layer. The first anti-sticking layer is preferably positioned as the outermost layer on the opposite side of the first protective film from the first primer layer. The second protective film may have a second anti-sticking layer. The second anti-sticking layer is preferably positioned as the outermost layer on the opposite side of the second protective film from the second primer layer. The first and second anti-sticking layers can suppress the occurrence of blocking in the wavelength conversion sheet wound in a roll, and can suppress scratching due to rubbing between the wavelength conversion sheet and another member when the wavelength conversion sheet is incorporated in a liquid crystal display device. The first and second anti-sticking layers each preferably include a binder resin and a filler to prevent sticking. The description in the present paragraph is one common to the first, second, and third embodiments.

### < <Physical properties>>

The first protective film and the second protective film have a value of water vapor transmission rate according to JIS K7129-2:2019 of preferably 0.20 g/m²•day or less and more preferably 0.15 g/m²•day or less. The temperature and relative humidity in measuring the water vapor transmission rate are under conditions differing from any of Conditions 1 to 5 in Table 1 in the JIS. Specifically, a temperature of 40°C and a relative humidity of 100% are employed.

The first protective film and the second protective film preferably have a value of oxygen transmission rate according to JIS K7126-2:2006 of 0.5 cc/m²•day•atm or less. The temperature and relative humidity in measuring the oxygen transmission rate are under conditions differing from those in Table 1 in the JIS. Specifically, a temperature of 23°C and a relative humidity of 90% are employed.

The first protective film and the second protective film have a total light transmittance according to JIS K7361-1:1997 of preferably 80% or more, more preferably 85% or more, and further preferably 87% or more.

The preferable ranges of the water vapor transmission rates, oxygen transmission rates, and total light transmittances of the first protective film and the second protective film are common to the first, second, and third embodiments.

### <Quantum dot-containing layer>

The quantum dot-containing layer includes a quantum dot and a binder resin.

Embodiments for the quantum dot-containing layer that are described below (embodiments of, for example, the material of the quantum dot, the particle size of the quantum dot, the quantum dot content, the material of the binder resin, the type of a curable resin composition, the type of a thiol compound, and the internal diffusion particle content) are ones common to quantum dot-containing layers in the first, second, and third embodiments.

The binder resin preferably comprises a cured product of a curable resin composition in order to improve the durability. That is, the quantum dot-containing layer is preferably a layer containing a cured product of a curable resin composition.

The quantum dot-containing layer preferably comprises 50% by mass or more, and more preferably comprises 70% by mass or more of a cured product of a curable resin composition based on the total amount of the components constituting the quantum dot-containing layer, in order to improve the durability.

The quantum dot is a nanometer-sized fine particle of a semiconductor, and exhibits a specific optical or electrical nature due to the quantum confinement effect (quantum size effect), the effect of confining an electron or an exciton in a small nanometer-sized crystal. The quantum dot is also referred to as a semiconductor nanoparticle or a semiconductor nanocrystal.

The quantum dot is not particularly limited as long as it is a nanometer-sized fine particle of a semiconductor and is a material that generates the quantum confinement effect. Examples of the quantum dot include a semiconductor fine particle whose emission color is regulated by its own particle size and a semiconductor fine particle having a dopant.

Quantum dots have different emission colors depending on the particle sizes thereof, and for example, in the case of quantum dots constituted only by a core made of CdSe, the peak wavelengths of fluorescence spectra when the particle sizes are 2.3 nm, 3.0 nm, 3.8 nm, and 4.6 nm are 528 nm, 570 nm, 592 nm, and 637 nm, respectively. That is, the particle size of the quantum dot that emits secondary light having a peak wavelength of 637 nm is 4.6 nm, and the particle size of the quantum dot that emits secondary light having a peak wavelength of 528 nm is 2.3 nm.

The quantum dots preferably include one or more selected from the group consisting of a quantum dot that emits secondary light having a wavelength corresponding to red and a quantum dot that emits secondary light having a wavelength corresponding to green, and more preferably include a quantum dot that emits secondary light having a wavelength corresponding to red and a quantum dot that emits secondary light having a wavelength corresponding to green. The quantum dots may contain a quantum dot other than the quantum dot that emits secondary light having a wavelength corresponding to red or the quantum dot that emits secondary light having a wavelength corresponding to green.

The quantum dot content is appropriately adjusted according to the thickness of the quantum dot-containing layer, the recycling rate of light in the backlight, the target color, or the like. When the thickness of the quantum dot-containing layer is in the range described later, the quantum dot content is preferably 0.010 parts by mass or more and 1.0 part by mass or less per 100 parts by mass of the binder resin of the quantum dot-containing layer.

Specific examples of a material that forms the core of the quantum dot include a semiconductor crystal containing a semiconductor compound or a semiconductor such as a group II-VI semiconductor compound such as MgS, MgSe, MgTe, CaS, CaSe, CaTe, SrS, SrSe, SrTe, BaS, BaSe, BaTe, ZnS, ZnSe, ZnTe, CdS, CdSe, CdTe, HgS, HgSe, and HgTe, a group III-V semiconductor compound such as AlN, AlP, AlAs, AlSb, GaAs, GaP, GaN, GaSb, InN, InAs, InP, InSb, TiN, TiP, TiAs, and TiSb, or a group IV semiconductor such as Si, Ge, and Pb. A semiconductor crystal including a semiconductor compound including three or more elements such as InGaP can also be used.

Further, as a quantum dot composed of a semiconductor fine particle having a dopant, a semiconductor crystal can be used that is formed by doping the above semiconductor compound with a cation of a rare earth metal or a cation of a transition metal, such as Eu³⁺, Tb³⁺, Ag⁺, or Cu⁺.

A semiconductor crystal such as CdS, CdSe, CdTe, InP, or InGaP is suitable as a material that forms the core of the quantum dot in view of ease of preparation, controllability of particle size that can provide light emission in the visible range, and fluorescence quantum yield.

The quantum dot may be made of one semiconductor compound or two or more semiconductor compounds, and for example, may have a core-shell type structure having a core made of a semiconductor compound and a shell made of a semiconductor compound different from that of the core.

When the core-shell type quantum dot is used, a material having a bandgap higher than that of the semiconductor compound that forms the core can be used as the semiconductor that forms the shell so that an exciton is confined in the core, whereby the light emission efficiency of the quantum dot can be enhanced.

Examples of the core-shell structure (core/shell) having such a bandgap magnitude relationship include CdSe/ZnS, CdSe/ZnSe, CdSe/CdS, CdTe/CdS, InP/ZnS, Gap/ZnS, Si/ZnS, InN/GaN, InP/CdSSe, InP/ZnSeTe, InGaP/ZnSe, InGaP/ZnS, Si/AlP, InP/ZnSTe, InGaP/ZnSTe, and InGaP/ZnSSe.

The size of the quantum dot may be appropriately controlled by the material that constitutes the quantum dot so that light having a desired wavelength can be obtained. As the particle size of the quantum dot decreases, the energy bandgap increases. Specifically, as the crystal size decreases, the light emission of the quantum dot shifts to the blue side, that is, to the high energy side. Accordingly, by changing the size of the quantum dot, the emission wavelength thereof can be regulated over the entire spectral wavelength region of the ultraviolet region, the visible region, and the infrared region.

In general, the particle size (diameter) of the quantum dot is preferably in the range of 0.5 nm or more and 20 nm or less and preferably in the range of 1 nm or more and 10 nm or less. A narrower size distribution of the quantum dot can provide a clearer emission color.

The shape of the quantum dot is not particularly limited, and may be, for example, a spherical shape, a rod shape, a disk shape, or any other shape. When the quantum dot is not in a spherical shape, the particle size of the quantum dot can be a value of a truly spherical shape having the same volume.

The quantum dot may be coated with a resin.

The binder resin of the quantum dot-containing layer preferably comprises a cured product of a curable resin composition such as a thermosetting resin composition and an ionizing radiation curable resin composition, in order to improve the durability.

The thermosetting resin composition is a composition including at least a thermosetting resin, and is a resin composition that is cured by heating. The thermosetting resin composition includes preferably a thiol compound and more preferably a polyfunctional thiol compound, which are described later, in addition to the thermosetting resin.

Examples of the thermosetting resin include an acrylic resin, a urethane resin, a phenol resin, a urea melamine resin, an epoxy resin, an unsaturated polyester resin, and a silicone resin. In the thermosetting resin composition, a curing agent is added, as necessary, to these curable resins.

The ionizing radiation curable resin composition is a composition including a compound having an ionizing radiation curable functional group (hereinafter, also referred to as an "ionizing radiation curable compound"). The ionizing radiation curable resin composition includes preferably a thiol compound and more preferably a polyfunctional thiol compound, which are described later, in addition to the ionizing radiation curable compound.

Examples of the ionizing radiation curable functional group include an ethylenically unsaturated bond group such as a (meth)acryloyl group, a vinyl group, or an allyl group, an epoxy group, and an oxetanyl group, and among these, an ethylenically unsaturated bond group is preferable. Among the ethylenically unsaturated bond groups, a (meth)acryloyl group is preferable. Hereinafter, the ionizing radiation curable compound having a (meth)acryloyl group is referred to as a (meth)acrylate-based compound. That is, the binder resin preferably includes a cured product of a composition including a (meth)acrylate-based compound.

As used herein, "(meth)acrylate" refers to methacrylate and acrylate. As used herein, "ionizing radiation" means an electromagnetic wave or a charged particle beam having an energy quantum that can polymerize or crosslink a molecule among electromagnetic waves or charged particle beams, and usually, an ultraviolet ray (UV) or an electron beam (EB) is used. An electromagnetic wave such as an X-ray or a γ-ray, and a charged particle beam such as an α-ray or an ion beam can also be used.

The ionizing radiation curable compound may be a monofunctional ionizing radiation curable compound having only one such functional group, a polyfunctional ionizing radiation curable compound having two or more such functional groups, or a mixture thereof. Among these, a polyfunctional ionizing radiation curable compound is preferable, and a polyfunctional (meth)acrylate-based compound having two or more (meth)acryloyl groups is more preferable. That is, the binder resin includes preferably a cured product of a polyfunctional ionizing radiation curable compound and more preferably a cured product of a polyfunctional (meth)acrylate-based compound. Further, the binder resin includes preferably a cured product of a composition including a polyfunctional ionizing radiation curable compound and a thiol compound and more preferably a cured product of a composition including a polyfunctional (meth)acrylate-based compound and a thiol compound.

The polyfunctional (meth)acrylate-based compound may have an alkyleneoxy group.

As the alkyleneoxy group, for example, an alkyleneoxy group having 2 or more to 4 or less carbon atoms is preferable, an alkyleneoxy group having 2 or 3 carbon atoms is more preferable, and an alkyleneoxy group having 2 carbon atoms is further preferable.

The polyfunctional (meth)acrylate-based compound having an alkyleneoxy group may be a polyfunctional (meth)acrylate-based compound having a polyalkyleneoxy group including a plurality of alkyleneoxy groups.

When the polyfunctional (meth)acrylate-based compound has an alkyleneoxy group, the number of alkyleneoxy groups in one molecule is preferably 2 or more and 30 or less, and more preferably 2 or more and 20 or less, further preferably 3 or more and 10 or less, and more further preferably 3 or more and 5 or less.

When the polyfunctional (meth)acrylate-based compound has an alkyleneoxy group, the compound preferably has a bisphenol structure. This tends to improve the heat resistance of the cured product. Examples of the bisphenol structure include a bisphenol A structure and a bisphenol F structure, and among these, a bisphenol A structure is preferable.

As the polyfunctional (meth)acrylate-based compound having an alkyleneoxy group, above all, ethoxylated bisphenol A type di(meth)acrylate, propoxylated bisphenol A type di(meth)acrylate, and propoxylated ethoxylated bisphenol A type di(meth)acrylate are preferable, and ethoxylated bisphenol A type di(meth)acrylate is more preferable.

The ionizing radiation curable compound may be a monomer, an oligomer, a low molecular weight polymer, or a mixture thereof.

As described above, the thermosetting resin composition and the ionizing radiation curable resin composition preferably include a thiol compound.

The thiol compound is a compound having one or more units represented by R-SH wherein R is an organic group. As used herein, a compound having one unit represented by R-SH is referred to as a monofunctional thiol compound, and a compound having two or more units represented by R-SH is referred to as a polyfunctional thiol compound.

The thiol compound may be a monofunctional thiol compound, but a polyfunctional thiol compound is preferable in view of improving the strength of the quantum dot-containing layer. Among the polyfunctional thiol compounds, a trifunctional thiol compound or a tetrafunctional thiol compound is more preferable.

The thiol compound causes a thiol-ene reaction of the following equation with a compound having a radically polymerizable functional group in the presence of a radical polymerization initiator. The thiol-ene reaction is preferable in the following: because the thiol-ene reaction can suppress polymerization shrinkage, the stress generated at the time of curing the quantum dot-containing layer is relaxed, and as a result, the interlayer close adhesion of the wavelength conversion sheet is easily further improved. In addition, the cured product obtained by the thiol-ene reaction is preferable in that the heat resistance is easily improved.

The following reaction is an example of a reaction between a monofunctional thiol compound and a compound having one radically polymerizable functional group. It is considered that the reaction product of a polyfunctional thiol compound and a compound having two or more radically polymerizable functional groups easily forms a dendrimer structure. Then, it is considered that when the dendrimer structure is formed, the flexibility of the quantum dot-containing layer increases, and that the quantum dot-containing layer itself easily exerts an excellent stress relaxation property. Examples of the radically polymerizable functional group include an ethylenically unsaturated bond-containing group such as a (meth)acryloyl group, a vinyl group, or an allyl group. 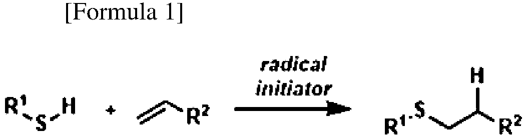 wherein R¹ and R² are organic groups.

Specific examples of the monofunctional thiol compound include hexanethiol, 1-heptanethiol, 1-octanethiol, 1-nonanethiol, 1-decanethiol, 3-mercaptopropionic acid, methyl mercaptopropionate, methoxybutyl mercaptopropionate, octyl mercaptopropionate, tridecyl mercaptopropionate, 2-ethylhexyl-3-mercaptopropionate, and n-octyl-3-mercaptopropionate.

Specific examples of the polyfunctional thiol compound include ethylene glycol bis(3-mercaptopropionate), diethylene glycol bis(3-mercaptopropionate), tetraethylene glycol bis(3-mercaptopropionate), 1,2-propylene glycol bis(3-mercaptopropionate), diethylene glycol bis(3-mercaptobutyrate), 1,4-butanediol bis(3-mercaptopropionate), 1,4-butanediol bis(3-mercaptobutyrate), 1,8-octanediol bis(3-mercaptopropionate), 1,8-octanediol bis(3-mercaptobutyrate), hexanediol bisthioglycolate, trimethylolpropane tris(3-mercaptopropionate), trimethylolpropane tris(3-mercaptobutyrate), trimethylolpropane tris(3-mercaptoisobutyrate), trimethylolpropane tris(2-mercaptoisobutyrate), trimethylolpropane tristhioglycolate, tris-[(3-mercaptopropionyloxy)-ethyl]-isocyanurate, trimethylolethane tris(3-mercaptobutyrate), pentaerythritol tetrakis(3-mercaptopropionate), pentaerythritol tetrakis(3-mercaptobutyrate), pentaerythritol tetrakis(3-mercaptoisobutyrate), pentaerythritol tetrakis(2-mercaptoisobutyrate), dipentaerythritol hexakis(3-mercaptopropionate), dipentaerythritol hexakis(2-mercaptopropionate), dipentaerythritol hexakis(3-mercaptobutyrate), dipentaerythritol hexakis(3-mercaptoisobutyrate), dipentaerythritol hexakis(2-mercaptoisobutyrate), pentaerythritol tetrakisthioglycolate, and dipentaerythritol hexakisthioglycolate.

In the ionizing radiation curable resin composition (or thermosetting resin composition), the mass ratio of the ionizing radiation curable compound (or thermosetting resin) and the thiol compound is preferably 80:20 to 35:65 and more preferably 70:30 to 40:60.

When the ionizing radiation curable compound is an ultraviolet curable compound, the ionizing radiation curable resin composition preferably includes an additive such as a photopolymerization initiator or a photopolymerization accelerator.

The quantum dot-containing layer may include an internal diffusion particle such as an organic particle and an inorganic particle.

The content of the internal diffusion particle is preferably 1 part by mass or more and 40 parts by mass or less and more preferably 3 parts by mass or more and 30 parts by mass or less per 100 parts by mass of the binder resin.

The average particle size of the internal diffusion particle is preferably 1 µm or more and 7 µm or less and more preferably 1 µm or more and 3 µm or less.

### <Applications>

The wavelength conversion sheet of the present disclosure can be used, for example, for a surface light source. Examples of the surface light source include a backlight light source of a liquid crystal display device and a backlight light source of an inspection device. That is, the wavelength conversion sheet of the present disclosure can be used as a "wavelength conversion sheet of a backlight light source of a liquid crystal display device", a "wavelength conversion sheet of a backlight light source of an inspection device", or the like. Further, the wavelength conversion sheet of the present disclosure can also be used as a "wavelength conversion sheet for horticulture". Examples of the wavelength conversion sheet for horticulture include a sheet having the function of converting an ultraviolet ray into a wavelength suitable for plant growth. Examples of the wavelength suitable for plant growth include a wavelength suitable for photosynthesis. The wavelength conversion sheet for horticulture can be installed, for example, on a ceiling or the like of a horticultural facility such as a plastic greenhouse and a glasshouse. The description in the present paragraph is one common to the first, second, and third embodiments.

### [Backlight in first embodiment]

The backlight in the first embodiment of the present disclosure is a backlight including: at least one light source that emits primary light; an optical plate that is disposed adjacent to the light source and is for light guiding or diffusion; and a wavelength conversion sheet disposed on a light going-out side of the optical plate, wherein the wavelength conversion sheet is the wavelength conversion sheet in the first embodiment of the present disclosure described above.

Embodiments for the backlight that are described below (embodiments of, for example, the direction of the wavelength conversion sheet to the optical plate, the type of the backlight, the configuration of the light guide plate, the configuration of the light diffusing plate, members other than the optical plate, and the configuration of the light source) are ones common to backlights in the first, second, and third embodiments.

The wavelength conversion sheet may be disposed in such a manner that the first quantum dot protective film side of the wavelength conversion sheet faces the optical plate, or disposed in such a manner that the second quantum dot protective film side of the wavelength conversion sheet faces the optical plate.

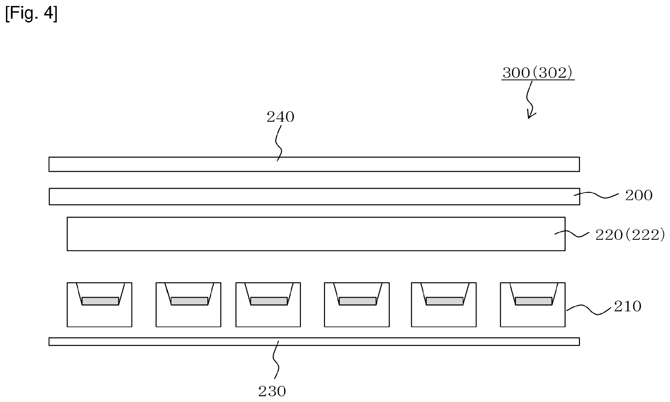

Examples of a backlight 300 of the present disclosure include an edge-lit type backlight 301 as shown in Fig. 3 and a direct-lit type backlight 302 as shown in Fig. 4. Fig. 3 are Fig. 4 are diagrams common to backlights in the first, second, and third embodiments.

An optical plate 220 used for the edge-lit type backlight 301 in Fig. 3 is an optical member for guiding primary light emitted by a light source 210, and is a so-called light guide plate 221. The light guide plate 221 has, for example, a substantially flat plate shape configured to have at least one surface as a light coming-in surface and one surface substantially orthogonal to the light coming-in surface as a light going-out surface.

The light guide plate is mainly made of a matrix resin selected from the group consisting of a highly transparent resin such as polymethyl methacrylate. A resin particle having a refractive index different from that of the matrix resin may be added, as necessary, to the light guide plate. Each surface of the light guide plate may have a complicated surface shape instead of a uniform flat surface, and may be provided with a dot pattern or the like.

The optical plate 220 used for the direct-lit type backlight 302 of Fig. 4 is an optical member (light diffusing plate 222) having a light diffusing property for making the pattern of the light source 210 less visible. Examples of the light diffusing plate 222 include a milky white resin plate having a thickness of 1 mm or more and 3 mm or less.

In addition to the light source, the optical plate, and the wavelength conversion sheet described above, the edge-lit type and direct-lit type backlights may include one or more members selected from the group consisting of a reflector, a light diffusing film, a prism sheet, a brightness enhancement film (BEF), a reflective polarizing film (DBEF), and the like, depending on the purpose.

The reflector is disposed on the opposite side of the optical plate from the light going-out surface side. The light diffusing film, the prism sheet, the brightness enhancement film, and the reflective polarizing film are disposed on the light going-out surface side of the optical plate. A backlight having an excellent balance of front brightness, viewing angle, and the like can be provided when the backlight is configured to include one or more members selected from the group consisting of a reflector, a light diffusing film, a prism sheet, a brightness enhancement film, a reflective polarizing film, and the like.

In the edge-lit type and direct-lit type backlights, the light source 210 is a light emitting body that emits primary light, and it is preferable to use a light emitting body that emits primary light having a wavelength corresponding to blue. The primary light having a wavelength corresponding to blue preferably has a peak wavelength in the range of 380 nm or more and 480 nm or less. The peak wavelength range is more preferably 450 nm ± 7 nm, more preferably 450 nm ± 5 nm, more preferably 450 nm ± 3 nm, and more preferably 450 nm ± 1 nm.

The light source 210 is preferably an LED light source and more preferably a blue monochromatic LED light source, in view of simplifying and downsizing the device in which the backlight is installed. Only one light source 210 may be included, but two or more light sources 210 are preferably included in view of emitting sufficient primary light and homogenizing the brightness distribution on the light going-out surface side.

### [Liquid crystal display device in first embodiment]

The liquid crystal display device in the first embodiment of the present disclosure is a liquid crystal display device including a backlight and a liquid crystal panel, wherein the backlight is the backlight in the first embodiment of the present disclosure described above.

Embodiments for the liquid crystal display device that are described below (embodiments of, for example, the type of the liquid crystal panel, a color filter, and a polarizing plate) are ones common to the liquid crystal display devices in the first, second, and third embodiments.

The liquid crystal panel is not particularly limited, and a general-purpose liquid crystal panel can be used as the liquid crystal panel of the liquid crystal display device. For example, a liquid crystal panel having a general structure can be used in which the liquid crystal layer is sandwiched between glass plates on the upper side and the lower side, respectively, thereof, specifically, a liquid crystal panel using a display mode such as TN, STN, VA, IPS, and OCB.

The liquid crystal display device further includes a polarizing plate, a color filter, and the like. A general-purpose polarizing plate and color filter can be used.

The display image of the liquid crystal display device is displayed in color by the white light emitted from the backlight penetrating the color filter. The liquid crystal display device, in which a color filter that matches the spectrum of a backlight using a quantum dot is used, can realize a display that is excellent in brightness and efficiency and produces a very clear color.

The first embodiment of the present disclosure includes the following <A1> to <A11>.
<A1> A wavelength conversion sheet comprising: a first quantum dot protective film; a quantum dot-containing layer; and a second quantum dot protective film in presented order, wherein
   the first quantum dot protective film comprises at least a first primer layer, a first base material, and a first barrier layer,
   the second quantum dot protective film comprises at least a second primer layer, a second base material, and a second barrier layer,
   the first primer layer and the second primer layer are each in contact with the quantum dot-containing layer,
   AD2 < AD1 is satisfied, wherein AD1 is defined as an adhesive force between the first quantum dot protective film and the quantum dot-containing layer and AD2 is defined as an adhesive force between the second quantum dot protective film and the quantum dot-containing layer, and
   T1/T3 is 1.20 or more, wherein T1 is defined as a total thickness of the first quantum dot protective film and T3 is defined as a thickness of the quantum dot-containing layer.
<A2> The wavelength conversion sheet according to <A1>, wherein the quantum dot-containing layer contains a cured product of a curable resin composition.
<A3> The wavelength conversion sheet according to <A1> or <A2>, wherein T1 is 50 µm or more and 140 µm or less.
<A4> The wavelength conversion sheet according to any one of <A1> to <A3>, wherein T3 is 15 µm or more and 60 µm or less.
<A5> The wavelength conversion sheet according to any one of <A1> to <A4>, wherein T1/T3 is 1.25 or more and 5.00 or less.
<A6> The wavelength conversion sheet according to any one of <A1> to <A5>, wherein T2 ≤ T3 is satisfied, wherein T2 is defined as a total thickness of the second quantum dot protective film.
<A7> The wavelength conversion sheet according to any one of <A1> to <A6>, wherein the first quantum dot protective film further comprises a first bulking base material.
<A8> The wavelength conversion sheet according to any one of <A1> to <A6>, wherein the first quantum dot protective film further comprises a protective base material for the first barrier layer.
<A9> The wavelength conversion sheet according to any one of <A1> to <A8>, wherein the first barrier layer and the second barrier layer each comprise an inorganic oxide layer and a coating layer.
<A10> A backlight comprising: at least one light source that emits primary light; an optical plate that is disposed adjacent to the light source and is for light guiding or diffusion; and a wavelength conversion sheet disposed on a light going-out side of the optical plate, wherein the wavelength conversion sheet is the wavelength conversion sheet according to any one of <A1> to <A9>.
<A11> A liquid crystal display device comprising a backlight and a liquid crystal panel, wherein the backlight is the backlight according to <A10>.

### [Second embodiment]

### [Wavelength conversion sheet in second embodiment]

The wavelength conversion sheet in the second embodiment of the present disclosure is a wavelength conversion sheet comprising: a first quantum dot protective film; a quantum dot-containing layer; and a second quantum dot protective film in presented order, wherein
the first quantum dot protective film comprises at least a first primer layer, a first base material, and a first barrier layer,
the second quantum dot protective film comprises at least a second primer layer, a second base material, and a second barrier layer,
the first primer layer and the second primer layer are each in contact with the quantum dot-containing layer,
AD2 < AD1 is satisfied, wherein AD1 is defined as an adhesive force between the first quantum dot protective film and the quantum dot-containing layer and AD2 is defined as an adhesive force between the second quantum dot protective film and the quantum dot-containing layer, and
T2 < T1 is satisfied, wherein T1 is defined as a total thickness of the first quantum dot protective film and T2 is defined as a total thickness of the second quantum dot protective film.

Fig. 1 is a cross-sectional view showing an embodiment of a wavelength conversion sheet 200 of the present disclosure.

The wavelength conversion sheet in the second embodiment of the present disclosure is not limited to the layer configuration in Fig. 1.

Fig. 2 is a diagram for illustrating the state of curling of the wavelength conversion sheet. In Fig. 2, the wavelength conversion sheet has a curled shape with both edges lifted.

The degree of curling of the wavelength conversion sheet 200 is determined through the same procedures as X1 to X4 in the first embodiment.

As the larger of Ave1 and Ave2 determined through X1 to X4 is defined as Ave (max), embodiments of a preferable range of Ave (max) in the second embodiment are the same as the embodiments of a preferable range of Ave (max) in the first embodiment.

The wavelength conversion sheet in the second embodiment of the present disclosure needs to satisfy the following configurations B1 to B3.

### <Configuration B1>

The first primer layer and the second primer layer are each in contact with the quantum dot-containing layer.

### <Configuration B2>

AD2 < AD1 is satisfied, wherein AD1 is defined as the adhesive force between the first quantum dot protective film and the quantum dot-containing layer and AD2 is defined as the adhesive force between the second quantum dot protective film and the quantum dot-containing layer.

### <Configuration B3>

T2 < T1 is satisfied, wherein T1 is defined as the total thickness of the first quantum dot protective film and T2 is defined as the total thickness of the second quantum dot protective film.

The following explains the technical significances of configurations B1 to B3.

Configuration B1 makes it possible to easily improve the close adhesion between the first quantum dot protective film and the quantum dot-containing layer and the close adhesion between the second quantum dot protective film and the quantum dot-containing layer. Even if slight curling has occurred in the wavelength conversion sheet, the occurrence of interface separation in the interface between the quantum dot-containing layer and the first quantum dot protective film and in the interface between the quantum dot-containing layer and the second quantum dot protective film can be easily suppressed by satisfying configuration B1.

Configuration B2 can be a cause for the occurrence of curling in the wavelength conversion sheet. However, the wavelength conversion sheet of the present disclosure can suppress curling by virtue of configuration B3.

First, why configuration B2 can be a cause for the occurrence of curling in the wavelength conversion sheet will be explained.

Quantum dot-containing layers normally include quantum dots and a binder resin. Additionally, they normally contain a cured product of a curable resin composition as the binder resin for improved durability. Thus, quantum dot-containing layers normally contain a cured product of a curable resin composition. In the production of the wavelength conversion sheet, the quantum dot-containing layer shrinks because of the curing of the curable resin composition. Then, if configuration B2 is satisfied, the stress generated through the shrinkage of the quantum dot-containing layer tends to more readily propagate to the first quantum dot protective film than to the second quantum dot protective film. Accordingly, satisfying configuration B2 allows the wavelength conversion sheet to tend to undergo the occurrence of curling that forms a convex on the first quantum dot protective film side.

AD1 and AD2 are expected to come to satisfy the relationship of configuration B2 through the production process for the wavelength conversion sheet.

The wavelength conversion sheet, which comprises a first quantum dot protective film, a quantum dot-containing layer, and a second quantum dot protective film in presented order, is normally produced through steps (1) to (4) shown below. If production is performed through steps (1) to (4) shown below, a coating liquid for quantum dot-containing layer formation more permeates the first primer layer, but less permeates the second primer layer. For this reason, production through the following steps (1) to (4) tends to give the relationship of AD2 < AD1.
(1) A first quantum dot protective film and a second quantum dot protective film are each produced.
(2) A coating liquid for quantum dot-containing layer formation is applied onto the first primer layer of the first quantum dot protective film to form a quantum dot-containing layer.
(3) The surface of the second quantum dot protective film on the second primer layer side is attached on the quantum dot-containing layer to give an in-process product of the wavelength conversion sheet comprising the first quantum dot protective film, the quantum dot-containing layer, and the second quantum dot protective film in presented order.
(4) The quantum dot-containing layer of the in-process product is irradiated with an ultraviolet ray.

Embodiments of preferable ranges of AD1, AD2, and AD1/AD2 in the second embodiment are the same as the embodiments of preferable ranges of AD1, AD2, and AD1/AD2 in the first embodiment.

Next, the reason why curling can be suppressed with configuration B3 will be explained.

Normally, protective films identical in layer configuration and thickness are used for the first quantum dot protective film and the second quantum dot protective film. The present inventors have found out that if protective films identical in layer configuration and thickness are used with configuration B2 satisfied, the resulting wavelength conversion sheet is likely to undergo the occurrence of curling that forms a convex on the first quantum dot protective film side. In addition, the present inventors have found out that setting the total thickness of the first quantum dot protective film, T1, to a value larger than the total thickness of the second quantum dot protective film, T2, makes it possible to easily hinder the propagation of stress to the first quantum dot protective film side, and the curling of the wavelength conversion sheet can be suppressed.

Satisfying T2 < T1 makes it possible to easily suppress the curling of the wavelength conversion sheet without giving a total thickness more than necessary to the wavelength conversion sheet.

An object of the wavelength conversion sheet in the second embodiment of the present disclosure is to suppress the occurrence of curling.

T1, T2, T1 + T2, T1 - T2, and T1/T2 are preferably within the following ranges.

T1 is preferably 40 µm or more and 160 µm or less, more preferably 50 µm or more and 140 µm or less, and further preferably 60 µm or more and 120 µm or less. Setting T1 to 40 µm or more makes it possible to more easily suppress the curling of the wavelength conversion sheet. Setting T1 to 160 µm or less makes it possible to easily achieve thinness for the wavelength conversion sheet.

T2 is preferably 8 µm or more and 50 µm or less, more preferably 9 µm or more and 40 µm or less, and further preferably 10 µm or more and 30 µm or less. Setting T2 to 8 µm or more makes it possible to easily allow the wavelength conversion sheet to have improved handleability. Setting T2 to 50 µm or less makes it possible to easily achieve thinness for the wavelength conversion sheet.

The total of T1 and T2 (T1 + T2) is preferably 50 µm or more and 200 µm or less, more preferably 55 µm or more and 180 µm or less, and further preferably 60 µm or more and 150 µm or less. Setting the total to 50 µm or more makes it possible to more easily suppress the curling of the wavelength conversion sheet. Setting the total to 200 µm or less makes it possible to easily achieve thinness for the wavelength conversion sheet.

T1 - T2 is preferably 30 µm or more and 130 µm or less, more preferably 40 µm or more and 120 µm or less, and further preferably 50 µm or more and 110 µm or less.

Because setting T1 - T2 within the range prevents T1 and T2 from being excessively large or excessive small, it becomes possible to more easily suppress the curling of the wavelength conversion sheet and to easily achieve thinness for the wavelength conversion sheet.

T1/T2 is preferably 2.0 or more and 12.0 or less, more preferably 2.5 or more and 11.0 or less, and further preferably 3.0 or more and 10.0 or less. Because setting T1/T2 within the range prevents T1 and T2 from being excessively large or excessive small, it becomes possible to more easily suppress the curling of the wavelength conversion sheet and to easily achieve thinness for the wavelength conversion sheet.

As the total thickness of base materials among the layers constituting the first protective film is defined as T1' and the total thickness of base materials among the layers constituting the second protective film is defined as T2', T2' < T1' is preferably satisfied. Satisfying the relationship of T2' < T1' makes it possible to more easily suppress the curling.

T1'/T2' is preferably 2.0 or more and 12.0 or less, more preferably 2.5 or more and 11.0 or less, and further preferably 3.0 or more and 10.0 or less. Because setting T1'/T2' within the range prevents T1' and T2' from being excessively large or excessive small, it becomes possible to more easily suppress the curling of the wavelength conversion sheet and to easily achieve thinness for the wavelength conversion sheet.

Examples of base materials to constitute the first protective film include a first base material, a first bulking base material, and a protective base material for the first barrier layer. The base materials to constitute the first protective film are preferably constituted with two base materials of a first base material and a first bulking base material or two base materials of a first base material and a protective base material for the first barrier layer, and more preferably constituted with two base materials of a first base material and a first bulking base material. The first base material, first bulking base material, and protective base material for the first barrier layer are preferably each a biaxially stretched resin film.

Examples of base materials to constitute the second protective film include a second base material, a second bulking base material, and a protective base material for the second barrier layer. The base material to constitute the second protective film is preferably constituted with one base material of a second base material. The second base material, second bulking base material, and protective base material for the second barrier layer are preferably each a biaxially stretched resin film.

### <Protective film>

The wavelength conversion sheet in the second embodiment of the present disclosure comprises a first quantum dot protective film and a second quantum dot protective film.

Herein, "the first quantum dot protective film" and "the second quantum dot protective film" are occasionally abbreviated as "the first protective film" and "the second protective film", respectively.

### <<First protective film>>

The first protective film comprises at least a first primer layer, a first base material, and a first barrier layer. The first protective film may have a layer other than the first primer layer, the first base material, and the first barrier layer. Examples of the layer other than the first primer layer, the first base material, and the first barrier layer include a first adhesive layer, a first bulking base material, a protective base material for the first barrier layer, and a first anti-sticking layer.

Examples of the lamination configuration of the first protective film in the second embodiment include 1-1 to 1-12 shown as examples for the first embodiment.

The first protective film preferably comprises a first bulking base material in view of easily satisfying the relationship of T2 < T1.

In the first protective film, the first bulking base material is preferably disposed farther from the first primer layer than the first base material and the first barrier layer. The first bulking base material is preferably formed over the first base material or the first barrier layer with a first adhesive layer intervening therebetween. Forming the first bulking base material over the first base material or the first barrier layer with a first adhesive layer intervening therebetween allows the first adhesive layer to relax stress in the quantum dot-containing layer, making it possible to more easily suppress curling.

The first protective film preferably comprises a protective base material for the first barrier layer in view of easily satisfying the relationship of T2 < T1.

In the first protective film, the protective base material for the first barrier layer is preferably disposed farther from the first primer layer than the first base material and the first barrier layer. The protective base material for the first barrier layer is preferably formed over the first base material or the first barrier layer with a first adhesive layer intervening therebetween. The protective base material for the first barrier layer and the first adhesive layer are preferably formed to be peelable from the first base material or the first barrier layer. Forming the protective base material for the first barrier layer over the first base material or the first barrier layer with a first adhesive layer intervening therebetween allows the first adhesive layer to relax stress in the quantum dot-containing layer, making it possible to more easily suppress curling.

### <<Second protective film>>

The second protective film comprises at least a second primer layer, a second base material, and a second barrier layer. The second protective film may have a layer other than the second primer layer, the second base material, and the second barrier layer. Examples of the layer other than the second primer layer, the second base material, and the second barrier layer include a second anti-sticking layer. The second protective film may have, for example, a second adhesive layer, a second bulking base material, and a protective base material for the second barrier layer, as long as the relationship of T2 < T1 is satisfied.

Examples of the lamination configuration of the second protective film in the second embodiment include 2-1 to 2-12 shown as examples for the first embodiment.

The second protective film preferably comprises neither a second bulking base material nor a protective base material for the second barrier layer in view of easily satisfying the relationship of T2 < T1.

As with the case of the first embodiment, in the wavelength conversion sheet in the second embodiment, the layers constituting the first protective film and the layers constituting the second protective film may be symmetrically or asymmetrically disposed with respect to the quantum dot-containing layer.

In view of easily achieving thinness for the wavelength conversion sheet, the first protective film and the second protective film are preferably used as a combination of the following (1) or (2).
(1) The first protective film comprises a first primer layer, a first base material, a first barrier layer, and a first bulking base material. The second protective film comprises a second primer layer, a second base material, and a second barrier layer, and comprises neither a second bulking base material nor a protective base material for the second barrier layer.
(2) The first protective film comprises a first primer layer, a first base material, a first barrier layer, and a protective base material for the first barrier layer. The second protective film comprises a second primer layer, a second base material, and a second barrier layer, and comprises neither a second bulking base material nor a protective base material for the second barrier layer.

### - Base material -

Hereinafter, the simple expression "the base material" means "any of the first base material and the second base material".

Examples of embodiments of the material and thickness of the base material in the second embodiment include the embodiments of the material and thickness of the base material in the first embodiment.

In the second embodiment, the thickness of the first base material and that of the second base material may be the same. If the first protective film comprises neither a first bulking base material nor a protective base material for the first barrier layer, however, the thickness of the first base material is preferably larger than that of the second base material.

### -Bulking base material -

Hereinafter, the simple expression "the bulking base material" means "any of the first bulking base material and the second bulking base material".

While a protective base material for the barrier layer, which is described later, is a base material that is peeled off after the production of the wavelength conversion sheet, the bulking base material is a base material that remains as a constituent member of the wavelength conversion sheet even after the production of the wavelength conversion sheet.

Examples of embodiments of the material of the bulking base material in the second embodiment include the embodiments of the material of the bulking base material in the first embodiment.

The first protective film preferably comprises a first bulking base material in view of easily satisfying the relationship of T2 < T1.

The second protective film may have a second bulking base material as long as the relationship of T2 < T1 is satisfied. However, the second protective film preferably comprises no second bulking base material in view of easily satisfying the relationship of T2 < T1.

The thickness of the bulking base material is preferably 10 µm or more, more preferably 20 µm or more, and further preferably 30 µm or more. Setting the thickness of the bulking base material to 10 µm or more makes it possible to more easily improve the handleability of the wavelength conversion sheet.

In view of achieving thinness for the wavelength conversion sheet, the thickness of the bulking base material is preferably 200 µm or less, more preferably 150 µm or less, more preferably 100 µm or less, and more preferably 75 µm or less.

### -Protective base material for barrier layer -

Hereinafter, the simple expression "the protective base material for the barrier layer" means "any of the protective base material for the first barrier layer and the protective base material for the second barrier layer".

Examples of embodiments of the role and usage of the protective base material for the barrier layer in the second embodiment include the embodiments of the role and usage of the protective base material for the barrier layer in the first embodiment. Examples of embodiments of the material of the protective base material for the barrier layer in the second embodiment include the embodiments of the material of the protective base material for the barrier layer in the first embodiment.

The first protective film preferably comprises a protective base material for the first barrier layer in view of easily satisfying the relationship of T2 < T1.

The second protective film may have a protective base material for the second barrier layer as long as the relationship of T2 < T1 is satisfied. However, the second protective film preferably comprises no protective base material for the second barrier layer in view of easily satisfying the relationship of T2 < T1.

The thickness of the protective base material for the barrier layer is preferably 10 µm or more, more preferably 20 µm or more, and further preferably 30 µm or more. Setting the thickness of the protective base material for the barrier layer to 10 µm or more makes it possible to more easily improve the handleability of the wavelength conversion sheet.

In view of achieving thinness for the wavelength conversion sheet, the thickness of the protective base material for the barrier layer is preferably 150 µm or less, more preferably 100 µm or less, more preferably 75 µm or less, and more preferably 50 µm or less.

### - Adhesive layer -

If the first protective film comprises a first bulking base material, the first bulking base material and the first base material or first barrier layer are preferably laminated through strong adhesion force with the first adhesive layer intervening therebetween. If the first protective film comprises a protective base material for the first barrier layer, the protective base material for the first barrier layer and the first base material or first barrier layer are preferably laminated in a peelable manner with the first adhesive layer intervening therebetween.

If the second protective film comprises a second bulking base material, the second bulking base material and the second base material or second barrier layer are preferably laminated through strong adhesion force with the second adhesive layer intervening therebetween. If the second protective film comprises a protective base material for the second barrier layer, the protective base material for the second barrier layer and the second base material or second barrier layer are preferably laminated in a peelable manner with the second adhesive layer intervening therebetween.

The definition of being "peelable" and measurement methods for peel strength are the same as the definition and measurement methods described for the first embodiment.

Hereinafter, the simple expression "the adhesive layer" means "any of the first adhesive layer and the second adhesive layer".

Examples of embodiments of the adhesive layer such as the type of the adhesive to constitute the adhesive layer and the thickness of the adhesive layer in the second embodiment include the embodiments of the adhesive layer in the first embodiment.

### - Barrier layer-

The first protective film comprises a first barrier layer, and the second protective film comprises a second barrier layer.

The first barrier layer is preferably positioned between the first base material and the first primer layer. The second barrier layer is preferably positioned between the second base material and the second primer layer.

If the first protective film comprises a first bulking base material, the first barrier layer is preferably positioned between the first base material and the first bulking base material. If the first protective film comprises a protective base material for the first barrier layer, the first barrier layer is preferably positioned between the first base material and the protective base material for the first barrier layer. If the second protective film comprises a second bulking base material, the second barrier layer is preferably positioned between the second base material and the second bulking base material. If the second protective film comprises a protective base material for the second barrier layer, the second barrier layer is preferably positioned between the second base material and the protective base material for the second barrier layer.

Hereinafter, the simple expression "the barrier layer" means "any of the first barrier layer and the second barrier layer".

Examples of embodiments of the barrier layer such as the layer configuration of the barrier layer, the material of an inorganic oxide layer, the thickness of an inorganic oxide layer, the material of a coating layer, and the thickness of a coating layer in the second embodiment include the embodiments of the barrier layer in the first embodiment.

### - Primer layer-

In view of improving the close adhesion to the quantum dot-containing layer, the first protective film comprises a first primer layer. In view of improving the close adhesion to the quantum dot-containing layer, the second protective film comprises a second primer layer.

The first primer layer and the second primer layer each need to be in contact with the quantum dot-containing layer. In other words, the first primer layer needs to be positioned as the outermost layer on one side of the first protective film. The second primer layer needs to be positioned as the outermost layer on one side of the second protective film.

Hereinafter, the simple expression "the primer layer" means "any of the first primer layer and the second primer layer".

Examples of embodiments of the primer layer such as the material of the primer layer and the thickness of the primer layer in the second embodiment include the embodiments of the primer layer in the first embodiment.

### - Anti-sticking layer -

The first protective film may have a first anti-sticking layer. The second protective film may have a second anti-sticking layer. Examples of embodiments of the first and second anti-sticking layers in the second embodiment include the embodiments of the first and second anti-sticking layers in the first embodiment.

### <<Physical properties>>

Preferable ranges of the water vapor transmission rates, oxygen transmission rates, and total light transmittances of the first protective film and the second protective film in the second embodiment are the same as the preferable ranges for the first embodiment.

### <Quantum dot-containing layer>

The quantum dot-containing layer includes a quantum dot and a binder resin.

Examples of embodiments of the quantum dot-containing layer such as the material of the quantum dot, the particle size of the quantum dot, the quantum dot content, the material of the binder resin, the type of a curable resin composition, the type of a thiol compound, and the internal diffusion particle content in the second embodiment include the embodiments of the quantum dot-containing layer in the first embodiment.

The thickness of the quantum dot-containing layer is preferably 30 µm or more and 110 µm or less, more preferably 40 µm or more and 90 µm or less, and further preferably 50 µm or more and 80 µm or less. Setting the thickness of the quantum dot-containing layer to 110 µm or less makes it possible to easily suppress stress to be generated through the shrinkage of the quantum dot-containing layer, hence making it possible to more easily suppress the occurrence of curling.

As the thickness of the quantum dot-containing layer is defined as T3, T1/T3 is preferably 0.5 or more and 5.0 or less, more preferably 0.8 or more and 4.0 or less, further preferably 1.2 or more and 3.0 or less, and more further preferably 1.3 or more and 2.5 or less. Because setting T1/T3 within the range prevents T1 and T3 from being excessively large or excessive small, it becomes possible to easily allow the quantum dot-containing layer to include a specific amount of quantum dots, to more easily suppress the curling of the wavelength conversion sheet, and to easily achieve thinness for the wavelength conversion sheet.

As the total thickness of base materials among the layers constituting the first protective film is defined as T1', T1'/T3 is preferably 0.5 or more and 5.0 or less, more preferably 0.8 or more and 4.0 or less, further preferably 1.2 or more and 3.0 or less, and more further preferably 1.3 or more and 2.5 or less. Because setting T1'/T3 within the range prevents T1' and T3 from being excessively large or excessive small, it becomes possible to more easily suppress the curling of the wavelength conversion sheet, to easily achieve thinness for the wavelength conversion sheet, and to easily allow the quantum dot-containing layer to include a specific amount of quantum dots.

### <Applications>

Examples of applications of the wavelength conversion sheet in the second embodiment of the present disclosure include the applications of the wavelength conversion sheet in the first embodiment.

### [Backlight]

The backlight in the second embodiment of the present disclosure is a backlight comprising: at least one light source that emits primary light; an optical plate that is disposed adjacent to the light source and is for light guiding or diffusion; and a wavelength conversion sheet disposed on a light going-out side of the optical plate, wherein the wavelength conversion sheet is the above-described wavelength conversion sheet in the second embodiment of the present disclosure.

Examples of embodiments of the backlight such as the direction of the wavelength conversion sheet to the optical plate, the type of the backlight, the configuration of the light guide plate, the configuration of the light diffusing plate, members other than the optical plate, and the configuration of the light source in the second embodiment include the embodiments of the backlight in the first embodiment.

### [Liquid crystal display device in second embodiment]

The liquid crystal display device in the second embodiment of the present disclosure is a liquid crystal display device comprising a backlight and a liquid crystal panel, wherein the backlight is the above-described backlight in the second embodiment of the present disclosure.

Examples of embodiments of the liquid crystal display device such as the type of the liquid crystal panel, a color filter, and a polarizing plate in the second embodiment include the embodiments of the liquid crystal display device in the first embodiment.

The second embodiment of the present disclosure includes the following <B1> to <B11>.
<B1> A wavelength conversion sheet comprising: a first quantum dot protective film; a quantum dot-containing layer; and a second quantum dot protective film in presented order, wherein
   the first quantum dot protective film comprises at least a first primer layer, a first base material, and a first barrier layer,
   the second quantum dot protective film comprises at least a second primer layer, a second base material, and a second barrier layer,
   the first primer layer and the second primer layer are each in contact with the quantum dot-containing layer,
   AD2 < AD1 is satisfied, wherein AD1 is defined as an adhesive force between the first quantum dot protective film and the quantum dot-containing layer and AD2 is defined as an adhesive force between the second quantum dot protective film and the quantum dot-containing layer, and
   T2 < T1 is satisfied, wherein T1 is defined as a total thickness of the first quantum dot protective film and T2 is defined as a total thickness of the second quantum dot protective film.
<B2> The wavelength conversion sheet according to <B1>, wherein the quantum dot-containing layer contains a cured product of a curable resin composition.
<B3> The wavelength conversion sheet according to <B1> or <B2>, wherein the first quantum dot protective film further comprises a first bulking base material.
<B4> The wavelength conversion sheet according to <B1> or <B2>, wherein the first quantum dot protective film further comprises a protective base material for the first barrier layer.
<B5> The wavelength conversion sheet according to any one of <B1> to <B4>, wherein a total of T1 and T2 is 50 µm or more and 200 µm or less.
<B6> The wavelength conversion sheet according to any one of <B1> to <B5>, wherein T1 is 40 µm or more and 160 µm or less.
<B7> The wavelength conversion sheet according to any one of <B1> to <B6>, wherein T2 is 8 µm or more and 50 µm or less.
<B8> The wavelength conversion sheet according to any one of <B1> to <B7>, wherein T1/T2 is 2.0 or more and 12.0 or less.
<B9> The wavelength conversion sheet according to any one of <B1> to <B8>, wherein the first barrier layer and the second barrier layer each comprise an inorganic oxide layer and a coating layer.
<B10> A backlight comprising: at least one light source that emits primary light; an optical plate that is disposed adjacent to the light source and is for light guiding or diffusion; and a wavelength conversion sheet disposed on a light going-out side of the optical plate, wherein the wavelength conversion sheet is the wavelength conversion sheet according to any one of <B1> to <B9>.
<B11> A liquid crystal display device comprising a backlight and a liquid crystal panel, wherein the backlight is the backlight according to <B10>.

### [Third embodiment]

### [Wavelength conversion sheet in third embodiment]

The wavelength conversion sheet in the third embodiment of the present disclosure is a wavelength conversion sheet comprising: a first quantum dot protective film; a quantum dot-containing layer; and a second quantum dot protective film in presented order, wherein
the first quantum dot protective film comprises at least a first primer layer, a first base material, and a first barrier layer,
the second quantum dot protective film comprises at least a second primer layer, a second base material, and a second barrier layer,
the first primer layer and the second primer layer are each in contact with the quantum dot-containing layer,
AD2 < AD1 is satisfied, wherein AD1 is defined as an adhesive force between the first quantum dot protective film and the quantum dot-containing layer and AD2 is defined as an adhesive force between the second quantum dot protective film and the quantum dot-containing layer, and
T1 is 20 µm or more and 120 µm or less, T1 + T2 + T3 is 60 µm or more and 150 µm or less, and T1/(T1 + T2 + T3) is more than 0.350, wherein T1 is defined as a total thickness of the first quantum dot protective film, T2 is defined as a total thickness of the second quantum dot protective film, and T3 is defined as a thickness of the quantum dot-containing layer.

Fig. 1 is a cross-sectional view showing an embodiment of a wavelength conversion sheet 200 of the present disclosure.

The wavelength conversion sheet in the third embodiment of the present disclosure is not limited to the layer configuration in Fig. 1.

Fig. 2 is a diagram for illustrating the state of curling of the wavelength conversion sheet. In Fig. 2, the wavelength conversion sheet has a curled shape with both edges lifted.

The degree of curling of the wavelength conversion sheet 200 is determined through the same procedures as X1 to X4 in the first embodiment.

As the larger of Ave1 and Ave2 determined through X1 to X4 is defined as Ave (max), embodiments of a preferable range of Ave (max) in the third embodiment are the same as the embodiments of a preferable range of Ave (max) in the first embodiment.

The wavelength conversion sheet in the third embodiment of the present disclosure needs to satisfy the following configurations C1 to C3.

### <Configuration C1>

The first primer layer and the second primer layer are each in contact with the quantum dot-containing layer.

### <Configuration C2>

AD2 < AD1 is satisfied, wherein AD1 is defined as the adhesive force between the first quantum dot protective film and the quantum dot-containing layer and AD2 is defined as the adhesive force between the second quantum dot protective film and the quantum dot-containing layer.

### <Configuration C3>

T1 is 20 µm or more and 120 µm or less, T1 + T2 + T3 is 60 µm or more and 150 µm or less, and T1/(T1 + T2 + T3) is more than 0.350, wherein T1 is defined as the total thickness of the first quantum dot protective film and T2 is defined as the total thickness of the second quantum dot protective film.

The following explains the technical significances of configurations C1 to C3.

Configuration C1 makes it possible to easily improve the close adhesion between the first quantum dot protective film and the quantum dot-containing layer and the close adhesion between the second quantum dot protective film and the quantum dot-containing layer. Even if slight curling has occurred in the wavelength conversion sheet, the occurrence of interface separation in the interface between the quantum dot-containing layer and the first quantum dot protective film and in the interface between the quantum dot-containing layer and the second quantum dot protective film can be easily suppressed by satisfying configuration C1.

Configuration C2 can be a cause for the occurrence of curling in the wavelength conversion sheet. However, the wavelength conversion sheet of the present disclosure can suppress curling by virtue of configuration C3.

First, why configuration C2 can be a cause for the occurrence of curling in the wavelength conversion sheet will be explained.

Quantum dot-containing layers normally include quantum dots and a binder resin. Additionally, they normally contain a cured product of a curable resin composition as the binder resin for improved durability. Thus, quantum dot-containing layers normally contain a cured product of a curable resin composition. In the production of the wavelength conversion sheet, the quantum dot-containing layer shrinks because of the curing of the curable resin composition. Then, if configuration C2 is satisfied, the stress generated through the shrinkage of the quantum dot-containing layer tends to more readily propagate to the first quantum dot protective film than to the second quantum dot protective film. Accordingly, satisfying configuration C2 allows the wavelength conversion sheet to tend to undergo the occurrence of curling that forms a convex on the first quantum dot protective film side.

AD1 and AD2 are expected to come to satisfy the relationship of configuration C2 through the production process for the wavelength conversion sheet.

The wavelength conversion sheet, which comprises a first quantum dot protective film, a quantum dot-containing layer, and a second quantum dot protective film in presented order, is normally produced through steps (1) to (4) shown below. If production is performed through steps (1) to (4) shown below, a coating liquid for quantum dot-containing layer formation more permeates the first primer layer, but less permeates the second primer layer. For this reason, production through the following steps (1) to (4) tends to give the relationship of AD2 < AD1.
(1) A first quantum dot protective film and a second quantum dot protective film are each produced.
(2) A coating liquid for quantum dot-containing layer formation is applied onto the first primer layer of the first quantum dot protective film to form a quantum dot-containing layer.
(3) The surface of the second quantum dot protective film on the second primer layer side is attached on the quantum dot-containing layer to give an in-process product of the wavelength conversion sheet comprising the first quantum dot protective film, the quantum dot-containing layer, and the second quantum dot protective film in presented order.
(4) The quantum dot-containing layer of the in-process product is irradiated with an ultraviolet ray.

Embodiments of preferable ranges of AD1, AD2, and AD1/AD2 in the third embodiment are the same as the embodiments of preferable ranges of AD1, AD2, and AD1/AD2 in the first embodiment.

As described above, satisfying configuration C2 causes the wavelength conversion sheet to easily undergo the occurrence of curling that forms a convex on the first quantum dot protective film side.

In order to suppress the curling of the wavelength conversion sheet, it is contemplated to give a larger thickness to the protective film or give a smaller thickness to the quantum dot-containing layer. However, thinness is required for members for liquid crystal display devices in recent years. Giving a larger thickness to the protective film prevents the wavelength conversion sheet from being thin. Giving a smaller thickness to the quantum dot-containing layer results in the shortage of the amount of quantum dots, and hence tends to lead to the narrowing of the color gamut of the wavelength conversion sheet.

The present inventors have diligently studied to find out that "thinness", "suppression of the curling", and "suppression of the narrowing of the color gamut" can be achieved by satisfying configuration C3.

An object of the wavelength conversion sheet in the third embodiment of the present disclosure is to achieve "thinness", "suppression of the curling", and "suppression of the narrowing of the color gamut".

Setting T1 to 20 µm or more makes it possible to easily hinder the propagation of stress to the first quantum dot protective film side and to easily suppress the curling of the wavelength conversion sheet. Setting T1 to 120 µm or less makes it possible to easily achieve thinness for the wavelength conversion sheet.

T1 is more preferably 30 µm or more and 100 µm or less, and further preferably 40 µm or more and 80 µm or less.

The thicknesses of the second quantum dot protective film and the quantum dot-containing layer can be ensured by setting T1 + T2 + T3 to 60 µm or more. Ensuring the thickness of the second quantum dot protective film makes it possible to more easily suppress the curling of the wavelength conversion sheet. Ensuring the thickness of the quantum dot-containing layer makes it possible to easily suppress the narrowing of the color gamut.

Setting T1 + T2 + T3 to 150 µm or less makes it possible to easily achieve thinness for the wavelength conversion sheet.

T1 + T2 + T3 is more preferably 70 µm or more and 145 µm or less, and further preferably 80 µm or more and 135 µm or less.

Setting T1/(T1 + T2 + T3) to more than 0.350 makes it possible to more easily hinder the propagation of stress to the first quantum dot protective film side and to easily suppress the curling of the wavelength conversion sheet.

Because setting T1/(T1 + T2 + T3) to a value equal to or lower than a specific value results in a good thickness balance between T1 and T2 plus T3, it becomes possible to more easily achieve thinness for the wavelength conversion sheet and to more easily suppress the narrowing of the color gamut of the wavelength conversion sheet. Accordingly, T1/(T1 + T2 + T3) is preferably more than 0.350 and 0.600 or less, and more preferably 0.355 or more and 0.550 or less.

T2, T1/T2, T3, T1/T3, and T2/T3 are preferably in the following ranges.

T2 is preferably 8 µm or more and 55 µm or less, more preferably 9 µm or more and 40 µm or less, and further preferably 10 µm or more and 30 µm or less. Setting T2 to 8 µm or more makes it possible to easily allow the wavelength conversion sheet to have improved handleability. Setting T2 to 50 µm or less makes it possible to easily achieve thinness for the wavelength conversion sheet.

T1/T2 is preferably 2.0 or more and 12.0 or less, more preferably 2.5 or more and 11.0 or less, and further preferably 3.0 or more and 10.0 or less. Setting T1/T2 to 2.0 or more makes it possible to easily hinder the propagation of stress to the first quantum dot protective film side and to more easily suppress the curling of the wavelength conversion sheet. Ensuring the thickness, T2, by setting T1/T2 to 12.0 or less makes it possible to easily allow the wavelength conversion sheet to have improved handleability.

T3 is preferably 25 µm or more and 100 µm or less, more preferably 30 µm or more and 80 µm or less, and further preferably 40 µm or more and 70 µm or less.

Setting T3 to 25 µm or more makes it possible to easily suppress the narrowing of the color gamut of the wavelength conversion sheet. Setting T3 to 100 µm or less makes it possible to easily achieve thinness for the wavelength conversion sheet and to easily suppress stress to be generated through the shrinkage of the quantum dot-containing layer, thus making it possible to more easily suppress the curling of the wavelength conversion sheet.

T1/T3 is preferably 0.4 or more and 4.0 or less, more preferably 0.6 or more and 3.0 or less, further preferably 0.8 or more and 2.0 or less, and more further preferably 1.3 or more and 1.9 or less. Because setting T1/T3 within the range prevents T1 and T3 from being excessively large or excessive small, it becomes possible to more easily suppress the curling of the wavelength conversion sheet, to easily achieve thinness for the wavelength conversion sheet, and to easily suppress the narrowing of the color gamut of the wavelength conversion sheet.

T3/T2 is preferably 0.5 or more and 9.0 or less, more preferably 0.8 or more and 6.0 or less, and further preferably 1.0 or more and 4.0 or less. Because setting T3/T2 within the range prevents T3 and T2 from being excessively large or excessive small, it becomes possible to more easily suppress the curling of the wavelength conversion sheet, to easily achieve thinness for the wavelength conversion sheet, and to easily suppress the narrowing of the color gamut of the wavelength conversion sheet.

As the total thickness of base materials among the layers constituting the first protective film is defined as T1', T1' is preferably 20 µm or more and 120 µm or less, more preferably 30 µm or more and 100 µm or less, and further preferably 40 µm or more and 80 µm or less. Setting T1' within the range makes it possible to more easily suppress the curling of the wavelength conversion sheet and to easily achieve thinness for the wavelength conversion sheet.

T1'/T3 is preferably 0.4 or more and 4.0 or less, more preferably 0.6 or more and 3.0 or less, further preferably 0.8 or more and 2.0 or less, and more further preferably 1.3 or more and 1.9 or less. Because setting T1'/T3 within the range prevents T1' and T3 from being excessively large or excessive small, it becomes possible to more easily suppress the curling of the wavelength conversion sheet, to easily achieve thinness for the wavelength conversion sheet, and to easily suppress the narrowing of the color gamut of the wavelength conversion sheet.

As the total thickness of base materials among the layers constituting the second protective film is defined as T2', T2' is preferably 8 µm or more and 50 µm or less, more preferably 9 µm or more and 40 µm or less, and further preferably 10 µm or more and 30 µm or less. Setting T2' within the range makes it possible to easily allow the wavelength conversion sheet to have improved handleability and to easily achieve thinness for the wavelength conversion sheet.

Examples of base materials to constitute the first protective film include a first base material, a first bulking base material, and a protective base material for the first barrier layer. The base materials to constitute the first protective film are preferably constituted with two base materials of a first base material and a first bulking base material or two base materials of a first base material and a protective base material for the first barrier layer, and more preferably constituted with two base materials of a first base material and a first bulking base material. The first base material, first bulking base material, and protective base material for the first barrier layer are preferably each a biaxially stretched resin film.

Examples of base materials to constitute the second protective film include a second base material, a second bulking base material, and a protective base material for the second barrier layer. The base material to constitute the second protective film is preferably constituted with one base material of a second base material. The second base material, second bulking base material, and protective base material for the second barrier layer are preferably each a biaxially stretched resin film.

### <Protective film>

The wavelength conversion sheet in the third embodiment of the present disclosure comprises a first quantum dot protective film and a second quantum dot protective film.

Herein, "the first quantum dot protective film" and "the second quantum dot protective film" are occasionally abbreviated as "the first protective film" and "the second protective film", respectively.

### <<First protective film>>

The first protective film comprises at least a first primer layer, a first base material, and a first barrier layer. The first protective film may have a layer other than the first primer layer, the first base material, and the first barrier layer. Examples of the layer other than the first primer layer, the first base material, and the first barrier layer include a first adhesive layer, a first bulking base material, a protective base material for the first barrier layer, and a first anti-sticking layer.

Examples of the lamination configuration of the first protective film in the third embodiment include 1-1 to 1-12 shown as examples for the first embodiment.

The first protective film preferably comprises a first bulking base material in view of easily setting T1 to 20 µm or more and setting T1/(T1 + T2 + T3) to more than 0.350.

In the first protective film, the first bulking base material is preferably disposed farther from the first primer layer than the first base material and the first barrier layer. The first bulking base material is preferably formed over the first base material or the first barrier layer with a first adhesive layer intervening therebetween. Forming the first bulking base material over the first base material or the first barrier layer with a first adhesive layer intervening therebetween allows the first adhesive layer to relax stress in the quantum dot-containing layer, making it possible to more easily suppress curling.

The first protective film preferably comprises a protective base material for the first barrier layer in view of easily setting T1 to 20 µm or more and setting T1/(T1 + T2 + T3) to more than 0.350.

In the first protective film, the protective base material for the first barrier layer is preferably disposed farther from the first primer layer than the first base material and the first barrier layer. The protective base material for the first barrier layer is preferably formed over the first base material or the first barrier layer with a first adhesive layer intervening therebetween. The protective base material for the first barrier layer and the first adhesive layer are preferably formed to be peelable from the first base material or the first barrier layer. Forming the protective base material for the first barrier layer over the first base material or the first barrier layer with a first adhesive layer intervening therebetween allows the first adhesive layer to relax stress in the quantum dot-containing layer, making it possible to more easily suppress curling.

### <<Second protective film>>

The second protective film comprises at least a second primer layer, a second base material, and a second barrier layer. The second protective film may have a layer other than the second primer layer, the second base material, and the second barrier layer. Examples of the layer other than the second primer layer, the second base material, and the second barrier layer include a second anti-sticking layer. The second protective film may have, for example, a second adhesive layer, a second bulking base material, and a protective base material for the second barrier layer, as long as the total of T1, T2, and T3 is 150 µm or less and T1/(T1 + T2 + T3) is more than 0.350.

Examples of the lamination configuration of the second protective film in the third embodiment include 2-1 to 2-12 shown as examples for the first embodiment.

The second protective film preferably comprises neither a second bulking base material nor a protective base material for the second barrier layer in view of easily setting the total of T1, T2, and T3 to 150 µm or less and setting T1/(T1 + T2 + T3) to more than 0.350.

As with the case of the first embodiment, in the wavelength conversion sheet in the third embodiment, the layers constituting the first protective film and the layers constituting the second protective film may be symmetrically or asymmetrically disposed with respect to the quantum dot-containing layer.

In view of easily achieving thinness for the wavelength conversion sheet, the first protective film and the second protective film are preferably used as any combination of the following (1) to (3).
(1) The first protective film comprises a first primer layer, a first base material, a first barrier layer, and a first bulking base material. The second protective film comprises a second primer layer, a second base material, and a second barrier layer, and comprises neither a second bulking base material nor a protective base material for the second barrier layer.
(2) The first protective film comprises a first primer layer, a first base material, a first barrier layer, and a protective base material for the first barrier layer. The second protective film comprises a second primer layer, a second base material, and a second barrier layer, and comprises neither a second bulking base material nor a protective base material for the second barrier layer.
(3) The first protective film comprises a first primer layer, a first base material, and a first barrier layer, and comprises neither a first bulking base material nor a protective base material for the first barrier layer. The second protective film comprises a second primer layer, a second base material, and a second barrier layer, and comprises neither a second bulking base material nor a protective base material for the second barrier layer.

### - Base material -

Hereinafter, the simple expression "the base material" means "any of the first base material and the second base material".

Examples of embodiments of the material and thickness of the base material in the third embodiment include the embodiments of the material and thickness of the base material in the first embodiment.

In the third embodiment, the thickness of the first base material and that of the second base material are preferably the same in view of stabilizing the physical properties of the wavelength conversion sheet over time.

### - Bulking base material -

Hereinafter, the simple expression "the bulking base material" means "any of the first bulking base material and the second bulking base material".

While a protective base material for the barrier layer, which is described later, is a base material that is peeled off after the production of the wavelength conversion sheet, the bulking base material is a base material that remains as a constituent member of the wavelength conversion sheet even after the production of the wavelength conversion sheet.

Examples of embodiments of the material of the bulking base material in the third embodiment include the embodiments of the material of the bulking base material in the first embodiment.

The first protective film preferably comprises a first bulking base material in view of easily setting T1 to 20 µm or more and setting T1/(T1 + T2 + T3) to more than 0.350.

The second protective film preferably comprises no second bulking base material in view of easily setting the total of T1, T2, and T3 to 150 µm or less and setting T1/(T1 + T2 + T3) to more than 0.350.

The thickness of the bulking base material is preferably 10 µm or more, more preferably 20 µm or more, and further preferably 30 µm or more. Setting the thickness of the bulking base material to 10 µm or more makes it possible to more easily improve the handleability of the wavelength conversion sheet.

In view of achieving thinness for the wavelength conversion sheet, the thickness of the bulking base material is preferably 110 µm or less, more preferably 80 µm or less, and further preferably 60 µm or less.

The thickness of the first base material and the thickness of the first bulking base material preferably satisfy the relationship of "thickness of first base material < thickness of first bulking base material". The thickness of the second base material and the thickness of the second bulking base material preferably satisfy the relationship of "thickness of second base material < thickness of second bulking base material".

Satisfying the relationships makes it possible to more easily improve the stiffness and strength of the wavelength conversion sheet in combination with improving the efficiency in forming the barrier layer on the base material.

### - Protective base material for barrier layer -

Hereinafter, the simple expression "the protective base material for the barrier layer" means "any of the protective base material for the first barrier layer and the protective base material for the second barrier layer".

Examples of embodiments of the role and usage of the protective base material for the barrier layer in the third embodiment include the embodiments of the role and usage of the protective base material for the barrier layer in the first embodiment. Examples of embodiments of the material of the protective base material for the barrier layer in the third embodiment include the embodiments of the material of the protective base material for the barrier layer in the first embodiment.

The first protective film preferably comprises a protective base material for the first barrier layer in view of easily setting T1 to 20 µm or more and setting T1/(T1 + T2 + T3) to more than 0.350.

The second protective film preferably comprises no protective base material for the second barrier layer in view of easily setting the total of T1, T2, and T3 to 150 µm or less and setting T1/(T1 + T2 + T3) to more than 0.350.

The thickness of the protective base material for the barrier layer is preferably 10 µm or more, more preferably 20 µm or more, and further preferably 30 µm or more. Setting the thickness of the protective base material for the barrier layer to 10 µm or more makes it possible to more easily improve the handleability of the wavelength conversion sheet.

In view of achieving thinness for the wavelength conversion sheet, the thickness of the protective base material for the barrier layer is preferably 100 µm or less, more preferably 80 µm or less, and further preferably 60 µm or less.

### - Adhesive layer -

If the first protective film comprises a first bulking base material, the first bulking base material and the first base material or first barrier layer are preferably laminated through strong adhesion force with the first adhesive layer intervening therebetween. If the first protective film comprises a protective base material for the first barrier layer, the protective base material for the first barrier layer and the first base material or first barrier layer are preferably laminated in a peelable manner with the first adhesive layer intervening therebetween.

If the second protective film comprises a second bulking base material, the second bulking base material and the second base material or second barrier layer are preferably laminated through strong adhesion force with the second adhesive layer intervening therebetween. If the second protective film comprises a protective base material for the second barrier layer, the protective base material for the second barrier layer and the second base material or second barrier layer are preferably laminated in a peelable manner with the second adhesive layer intervening therebetween.

The definition of being "peelable" and measurement methods for peel strength are the same as the definition and measurement methods described for the first embodiment.

Hereinafter, the simple expression "the adhesive layer" means "any of the first adhesive layer and the second adhesive layer".

Examples of embodiments of the adhesive layer such as the type of the adhesive to constitute the adhesive layer and the thickness of the adhesive layer in the third embodiment include the embodiments of the adhesive layer in the first embodiment.

### - Barrier layer-

The first protective film comprises a first barrier layer, and the second protective film comprises a second barrier layer.

The first barrier layer is preferably positioned between the first base material and the first primer layer. The second barrier layer is preferably positioned between the second base material and the second primer layer.

If the first protective film comprises a first bulking base material, the first barrier layer is preferably positioned between the first base material and the first bulking base material. If the first protective film comprises a protective base material for the first barrier layer, the first barrier layer is preferably positioned between the first base material and the protective base material for the first barrier layer. If the second protective film comprises a second bulking base material, the second barrier layer is preferably positioned between the second base material and the second bulking base material. If the second protective film comprises a protective base material for the second barrier layer, the second barrier layer is preferably positioned between the second base material and the protective base material for the second barrier layer.

Hereinafter, the simple expression "the barrier layer" means "any of the first barrier layer and the second barrier layer".

Examples of embodiments of the barrier layer such as the layer configuration of the barrier layer, the material of an inorganic oxide layer, the thickness of an inorganic oxide layer, the material of a coating layer, and the thickness of a coating layer in the third embodiment include the embodiments of the barrier layer in the first embodiment.

### - Primer layer -

In view of improving the close adhesion to the quantum dot-containing layer, the first protective film comprises a first primer layer. In view of improving the close adhesion to the quantum dot-containing layer, the second protective film comprises a second primer layer.

The first primer layer and the second primer layer each need to be in contact with the quantum dot-containing layer. In other words, the first primer layer needs to be positioned as the outermost layer on one side of the first protective film. The second primer layer needs to be positioned as the outermost layer on one side of the second protective film.

Hereinafter, the simple expression "the primer layer" means "any of the first primer layer and the second primer layer".

Examples of embodiments of the primer layer such as the material of the primer layer and the thickness of the primer layer in the third embodiment include the embodiments of the primer layer in the first embodiment.

### - Anti-sticking layer -

The first protective film may have a first anti-sticking layer. The second protective film may have a second anti-sticking layer. Examples of embodiments of the first and second anti-sticking layers in the third embodiment include the embodiments of the first and second anti-sticking layers in the first embodiment.

### <<Physical properties>>

Preferable ranges of the water vapor transmission rates, oxygen transmission rates, and total light transmittances of the first protective film and the second protective film in the third embodiment are the same as the preferable ranges for the first embodiment.

### <Quantum dot-containing layer>

The quantum dot-containing layer includes a quantum dot and a binder resin.

Examples of embodiments of the quantum dot-containing layer such as the material of the quantum dot, the particle size of the quantum dot, the quantum dot content, the material of the binder resin, the type of a curable resin composition, the type of a thiol compound, and the internal diffusion particle content in the third embodiment include the embodiments of the quantum dot-containing layer in the first embodiment.

### <Applications>

Examples of applications of the wavelength conversion sheet in the third embodiment of the present disclosure include the applications of the wavelength conversion sheet in the first embodiment.

### [Backlight in third embodiment]

The backlight in the third embodiment of the present disclosure is a backlight comprising: at least one light source that emits primary light; an optical plate that is disposed adjacent to the light source and is for light guiding or diffusion; and a wavelength conversion sheet disposed on a light going-out side of the optical plate, wherein the wavelength conversion sheet is the above-described wavelength conversion sheet in the third embodiment of the present disclosure.

Examples of embodiments of the backlight such as the direction of the wavelength conversion sheet to the optical plate, the type of the backlight, the configuration of the light guide plate, the configuration of the light diffusing plate, members other than the optical plate, and the configuration of the light source in the third embodiment include the embodiments of the backlight in the first embodiment.

### [Liquid crystal display device in third embodiment]

The liquid crystal display device in the third embodiment of the present disclosure is a liquid crystal display device comprising a backlight and a liquid crystal panel, wherein the backlight is the above-described backlight in the third embodiment of the present disclosure.

Examples of embodiments of the liquid crystal display device such as the type of the liquid crystal panel, a color filter, and a polarizing plate in the third embodiment include the embodiments of the liquid crystal display device in the first embodiment.

The third embodiment of the present disclosure includes the following <C1> to <C9>.
<C1> A wavelength conversion sheet comprising: a first quantum dot protective film; a quantum dot-containing layer; and a second quantum dot protective film in presented order, wherein
   the first quantum dot protective film comprises at least a first primer layer, a first base material, and a first barrier layer,
   the second quantum dot protective film comprises at least a second primer layer, a second base material, and a second barrier layer,
   the first primer layer and the second primer layer are each in contact with the quantum dot-containing layer,
   AD2 < AD1 is satisfied, wherein AD1 is defined as an adhesive force between the first quantum dot protective film and the quantum dot-containing layer and AD2 is defined as an adhesive force between the second quantum dot protective film and the quantum dot-containing layer, and
   T1 is 20 µm or more and 120 µm or less, T1 + T2 + T3 is 60 µm or more and 150 µm or less, and T1/(T1 + T2 + T3) is more than 0.350, wherein T1 is defined as a total thickness of the first quantum dot protective film, T2 is defined as a total thickness of the second quantum dot protective film, and T3 is defined as a thickness of the quantum dot-containing layer.
<C2> The wavelength conversion sheet according to <C1>, wherein the quantum dot-containing layer contains a cured product of a curable resin composition.
<C3> The wavelength conversion sheet according to <C1> or <C2>, wherein T3 is 25 µm or more and 100 µm or less.
<C4> The wavelength conversion sheet according to any one of <C1> to <C3>, wherein T1/T3 is 0.4 or more and 4.0 or less.
<C5> The wavelength conversion sheet according to any one of <C1> to <C4>, wherein the first quantum dot protective film further comprises a first bulking base material.
<C6> The wavelength conversion sheet according to any one of <C1> to <C4>, wherein the first quantum dot protective film further comprises a protective base material for the first barrier layer.
<C7> The wavelength conversion sheet according to any one of <C1> to <C6>, wherein the first barrier layer and the second barrier layer each comprise an inorganic oxide layer and a coating layer.
<C8> A backlight comprising: at least one light source that emits primary light; an optical plate that is disposed adjacent to the light source and is for light guiding or diffusion; and a wavelength conversion sheet disposed on a light going-out side of the optical plate, wherein the wavelength conversion sheet is the wavelength conversion sheet according to any one of <C1> to <C7>.
<C9> A liquid crystal display device comprising a backlight and a liquid crystal panel, wherein the backlight is the backlight according to <C8>.

### Examples

Next, the present disclosure will be described in more detail with reference to Examples, but the present disclosure is not limited to these Examples at all. "Parts" and "%" are by mass unless otherwise specified.

### <<Examples and Comparative Examples of first embodiment>>

### 1. Measurements and evaluations

The following measurements and evaluations of the wavelength conversion sheets of Examples and Comparative Examples were carried out. Results thereof are shown in Table 1.

### 1-1. Adhesive force

From each of the wavelength conversion sheets of Examples and Comparative Examples, test pieces of 25 mm × 150 mm were cut out. Peeling test was conducted with a table-top material tester (STA-1150, manufactured by Takachiho-Seiki. Co., Ltd.) in an environment at a temperature of 23°C under conditions of tensile speed: 300 mm/min, peel direction: 180°, and chuck-to-chuck distance: 15 mm to measure the adhesive force between the first protective film and the quantum dot-containing layer and the adhesion force between the second protective film and the quantum dot-containing layer. Measurement was conducted three times for each adhesive force. The mean of the three measurements was calculated for each, and the means were determined as AD1 and AD2 of the wavelength conversion sheet.

### 1-2. Curling

According to the procedures of X1 to X4 in the text of the present specification, the curling of each of the wavelength conversion sheets of Examples and Comparative Examples was measured. Because the wavelength conversion sheets of Examples and Comparative Examples curled in such a manner that a convex was formed on the first protective film side, only Ave1 was determined, and Ave1 was used as Ave (max). Based on the values of Ave (max), ranking was performed as follows.
AA: Ave (max) was 5.0 mm or less
A: Ave (max) was more than 5.0 mm and 7.5 mm or less
A⁻: Ave (max) was more than 7.5 mm and 10.0 mm or less
B: Ave (max) was more than 10.0 mm and 15.0 mm or less
C: Ave (max) was more than 15.0 mm

### 2. Preparation of quantum dot dispersion liquid

A quantum dot and amino-modified silicone were mixed at the composition ratio shown below in a glove box purged with nitrogen such that the oxygen concentration was 300 ppm or less, and the resulting mixture was stirred using a magnetic stirrer for 4 hours while heated in a water bath at 90°C. Thereafter, the mixture was filtered through a polypropylene filter having a pore size of 0.2 µm to obtain a CdSe/ZnS core-shell type quantum dot dispersion liquid.
- Quantum dot 0.9 parts by mass
   (Emission peak: 540 nm, serial number: 748056, manufactured by Sigma-Aldrich Corporation)
- Quantum dot 0.9 parts by mass
   (Emission peak: 630 nm, serial number: 790206, manufactured by Sigma-Aldrich Corporation)
- Amino-modified silicone 99 parts by mass
   (Manufactured by Genesee Polymers Corporation, product number: GP-344, viscosity: 670 mPa•s)

### 3. Preparation of wavelength conversion sheet

### [Example A1]

### <First protective film>

A surface of a first base material (biaxially stretched PET film having easy adherence layer on one surface, thickness: 12 µm, "EMBLET (registered trademark) PTM" from UNITIKA LTD.) on the side without an easy adherence layer was subjected to plasma treatment in a vacuum deposition apparatus, and aluminum oxide was then vapor-deposited thereon in line by a vacuum vapor deposition method to form an inorganic oxide layer A having a thickness of 8 nm. Next, the coating liquid for coating layer formation shown later was applied onto the inorganic oxide layer A by gravure printing, and heat-treated at 180°C for 60 seconds to form a coating layer B having a thickness of 200 nm. Next, aluminum oxide was vapor-deposited on the coating layer B by a vacuum vapor deposition method to form an inorganic oxide layer C having a thickness of 8 nm. Next, the coating liquid for coating layer formation shown later was applied onto the inorganic oxide layer C by gravure printing, and heat-treated at 180°C for 60 seconds to form a coating layer D having a thickness of 230 nm.

Next, a coating liquid 1 for primer layer formation shown later was applied onto the coating layer D by gravure printing, and heat-treated at 80°C for 60 seconds to form a first primer layer having a thickness of 250 nm.

Through the above operations, a laminate A1-1 having the first primer layer, the first barrier layer, and the first base material in presented order was obtained. The first barrier layer has the inorganic oxide layer A, the coating layer B, the inorganic oxide layer C, and the coating layer D in presented order from the first base material side.

Next, a two-component curable polyurethane-based adhesive was applied onto one surface of a first bulking base material (biaxially stretched PET film, thickness: 100 µm) by gravure printing, and dried to form a first adhesive layer having a thickness of 7 µm, thereby obtaining a laminated body A1-2 having the first adhesive layer on the first bulking base material.

Next, the surface of the first adhesive layer side of the laminated body A1-2 was superposed on the surface of the first base material side of the laminated body A1-1, and the laminated body A1-1 and the laminated body A1-2 were dry-laminated.

Through the above operations, a first protective film having the first primer layer, the first barrier layer, the first base material, the first adhesive layer, and the first bulking base material in presented order for use in Example A1 was obtained. The total thickness of the first protective film, T1, for use in Example A1 was 119.696 µm.

### <Second protective film>

The laminated body A1-1 was used as a second protective film for use in Example A1. The second protective film has a second primer layer, a second barrier layer, and a second base material in presented order. The total thickness of the second protective film, T2, for use in Example A1 was 12.696 µm.

### <Preparation of wavelength conversion sheet>

A coating liquid 1 for a quantum dot-containing layer having the formulation shown later was applied onto the surface of the first primer layer side of the first protective film, and dried to form a quantum dot-containing layer not irradiated with ionizing radiation, thereby obtaining a laminated body A1-3.

Next, the laminated body A1-3 and the second protective film were laminated such that the surface of the side of the quantum dot-containing layer not irradiated with ionizing radiation of the laminated body A1-3 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Example A1. The thickness of the quantum dot-containing layer is 50 µm.

### <Preparation of coating liquid for coating layer formation>

Tetraethoxysilane was mixed into a solution (pH 2.2) obtained by mixing water, isopropyl alcohol, and 0.5 N hydrochloric acid, while cooling the same to 10°C, to thereby prepare solution A. Separately, polyvinyl alcohol and isopropyl alcohol having a saponification value of 99% or more were mixed to thereby prepare solution B. Solution A and solution B were mixed to prepare a coating liquid for coating layer formation (solid content: 5% by mass). The mass ratio of tetraethoxysilane to polyvinyl alcohol in the coating liquid for coating layer formation is 100:14.

### <Coating liquid 1 for primer layer formation>

- Polyester polyol 50 parts by mass
   (Hydroxyl value: 62 mgKOH/g, solid content: 20% by mass)
- Silane coupling agent 1 part by mass
   (3-Glycidoxypropylmethyldimethoxysilane)
- Silica filler 1 part by mass
   (Average particle size 5 µm)
- Curing agent 1 part by mass
   (1,6-Hexamethylene diisocyanate, solid content: 35% by mass)
- Solvent 50 parts by mass
   (Methyl ethyl ketone)

### <Coating liquid 1 for quantum dot-containing layer>

- Polyfunctional acrylate-based compound 58.11 parts by mass
   (Ethoxylated bisphenol A diacrylate; trade name "ABE-300" of Shin-Nakamura Chemical Co., Ltd.)
- Polyfunctional thiol compound 38.74 parts by mass
   (Pentaerythritol tetrakis(3-mercaptopropionate); trade name "PEMP" of SC Organic Chemical Co., Ltd.)
- Photopolymerization initiator 0.5 parts by mass
   (Trade name "Omnirad TPO H" of IGM Resins B.V.)
- Quantum dot dispersion liquid prepared in "2" above 1.61 parts by mass
- Acetic acid 0.79 parts by mass
- Titanium oxide 0.25 parts by mass
   (Trade name "Ti-Pure R-706" of The Chemours company; particle size 0.36 µm)

### [Example A2]

A wavelength conversion sheet of Example A2 was obtained in the same manner as in Example A1, except that the thickness of the first bulking base material was changed to 75 µm. The total thickness of the first protective film, T1, for use in Example A2 was 94.696 µm. The total thickness of the second protective film, T2, for use in Example A2 was 12.696 µm.

### [Example A3]

A wavelength conversion sheet of Example A3 was obtained in the same manner as in Example A1, except that the thickness of the first bulking base material was changed to 50 µm. The total thickness of the first protective film, T1, for use in Example A3 was 69.696 µm. The total thickness of the second protective film, T2, for use in Example A3 was 12.696 µm.

### [Example A4]

### <First protective film>

A laminated body A1-4 having a first primer layer, a first barrier layer, and a first base material in presented order was obtained in the same manner as for the laminated body A1-1, except that the first base material was changed to a biaxially stretched PET film having an easy adherence layer on one surface and having a thickness of 23 µm.

Next, a pressure-sensitive adhesive peelable from the first base material was applied onto one surface of a protective base material for the first barrier layer (biaxially stretched PET film, thickness: 75 µm) by gravure printing, and dried to form a peelable first pressure-sensitive adhesive layer having a thickness of 7 µm, thereby obtaining a laminated body A1-5 having the peelable first adhesive layer on the protective base material for the first barrier layer.

Next, the surface of the first pressure-sensitive adhesive layer side of the laminated body A1-5 was superposed on the surface of the first base material side of the laminated body A1-4, and the laminated body A1-4 and the laminated body A1-5 were dry-laminated.

Through the above operations, a first protective film having the first primer layer, the first barrier layer, the first base material, the first pressure-sensitive adhesive layer, and the protective base material for the first barrier layer in presented order for use in Example A4 was obtained. The total thickness of the first protective film, T1, for use in Example A4 was 105.696 µm.

### <Second protective film>

The laminated body A1-4 was used as a second protective film for use in Example A4. The total thickness of the second protective film, T2, for use in Example A4 was 23.696 µm.

### <Preparation of wavelength conversion sheet>

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body A1-6.

Next, the laminated body A1-6 and the second protective film were laminated such that the surface of the side of the quantum dot-containing layer not irradiated with ionizing radiation of the laminated body A1-6 and the surface of the second primer layer side of the second protective film faced each other, and the resultant was then irradiated with an ultraviolet ray to allow the curing of the ionizing radiation curable resin composition of the quantum dot-containing layer to proceed, thereby obtaining a wavelength conversion sheet of Example A4. The thickness of the quantum dot-containing layer is 50 µm.

The peel strength of the protective base material for the first barrier layer in the wavelength conversion sheet of Example A4 was 0.7 N/25 mm. The peel strength indicates the force in peeling the first pressure-sensitive adhesive layer and the protective base material for the first barrier layer from the wavelength conversion sheet.

### [Example A5]

A wavelength conversion sheet of Example A5 was obtained in the same manner as in Example A4, except that the thickness of the protective base material for the first barrier layer was changed to 50 µm. The total thickness of the first protective film, T1, for use in Example A5 was 80.696 µm. The total thickness of the second protective film, T2, for use in Example A5 was 23.696 µm.

The peel strength of the protective base material for the first barrier layer in the wavelength conversion sheet of Example A5 was 0.8 N/25 mm. The peel strength indicates the force in peeling the first pressure-sensitive adhesive layer and the protective base material for the first barrier layer from the wavelength conversion sheet.

### [Example A6]

A laminated body A1-7 having a first primer layer, a first barrier layer, and a first base material in presented order was obtained in the same manner as for the laminated body A1-1, except that the first base material was changed to a biaxially stretched PET film having an easy adherence layer on one surface and having a thickness of 50 µm. Then, the laminated body A1-7 was used as a first protective film for use in Example A6.

The laminated body A1-7 was also used as a second protective film for use in Example A2. The second protective film has a second primer layer, a second barrier layer, and a second base material in presented order.

The total thickness of the first protective film, T1, and the total thickness of the second protective film, T2, each protective film being for use in Example A6, were both 50.696 µm.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body A1-8.

Next, the laminated body A1-8 and the second protective film were laminated such that the surface of the side of the quantum dot-containing layer not irradiated with ionizing radiation of the laminated body A1-8 and the surface of the second primer layer side of the second protective film faced each other, and the resultant was then irradiated with an ultraviolet ray to allow the curing of the ionizing radiation curable resin composition of the quantum dot-containing layer to proceed, thereby obtaining a wavelength conversion sheet of Example A6. The thickness of the quantum dot-containing layer is 40 µm.

### [Comparative Example A1]

The laminated body A1-1 was used as a first protective film for use in Comparative Example A1. The first protective film has a first primer layer, a first barrier layer, and a first base material in presented order. The laminated body A1-1 was used as a second protective film for use in Comparative Example A1. The second protective film has a second primer layer, a second barrier layer, and a second base material in presented order. The total thickness of the first protective film, T1, and the total thickness of the second protective film, T2, each protective film being for use in Comparative Example A1, were both 12.696 µm.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body A1-9.

Next, the laminated body A1-9 and the second protective film were laminated such that the surface of the side of the quantum dot-containing layer not irradiated with ionizing radiation of the laminated body A1-9 and the surface of the second primer layer side of the second protective film faced each other, and the resultant was then irradiated with an ultraviolet ray to allow the curing of the ionizing radiation curable resin composition of the quantum dot-containing layer to proceed, thereby obtaining a wavelength conversion sheet of Comparative Example A1. The thickness of the quantum dot-containing layer is 50 µm.

### [Comparative Example A2]

The laminated body A1-4 was used as a first protective film for use in Comparative Example A2. The first protective film has a first primer layer, a first barrier layer, and a first base material in presented order. The laminated body A1-4 was used as a second protective film for use in Comparative Example A2. The second protective film has a second primer layer, a second barrier layer, and a second base material in presented order. The total thickness of the first protective film, T1, and the total thickness of the second protective film, T2, each protective film being for use in Comparative Example A2, were both 23.696 µm.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body A1-10.

Next, the laminated body A1-10 and the second protective film were laminated such that the surface of the side of the quantum dot-containing layer not irradiated with ionizing radiation of the laminated body A1-10 and the surface of the second primer layer side of the second protective film faced each other, and the resultant was then irradiated with an ultraviolet ray to allow the curing of the ionizing radiation curable resin composition of the quantum dot-containing layer to proceed, thereby obtaining a wavelength conversion sheet of Comparative Example A2. The thickness of the quantum dot-containing layer is 50 µm.

### [Comparative Example A3]

The second protective film for use in Example A1 was used as a first protective film for use in Comparative Example A3. The first protective film has a first primer layer, a first barrier layer, and a first base material in presented order. The total thickness of the first protective film, T1, for use in Comparative Example A3 was 12.696 µm.

The first protective film for use in Example A1 was used as a second protective film for use in Comparative Example A3. The second protective film has a second primer layer, a second barrier layer, a second base material, a second adhesive layer, and a second bulking base material in presented order. The total thickness of the second protective film, T2, for use in Comparative Example A3 was 119.696 µm.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body A1-11.

Next, the laminated body A1-11 and the second protective film were laminated such that the surface of the side of the quantum dot-containing layer not irradiated with ionizing radiation of the laminated body A1-11 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Comparative Example A3. The thickness of the quantum dot-containing layer is 50 µm.

### [Comparative Example A4]

The second protective film for use in Example A3 was used as a first protective film for use in Comparative Example A4. The first protective film has a first primer layer, a first barrier layer, and a first base material in presented order. The total thickness of the first protective film, T1, for use in Comparative Example A4 was 12.696 µm.

The first protective film for use in Example A3 was used as a second protective film for use in Comparative Example A4. The second protective film has a second primer layer, a second barrier layer, a second base material, a second adhesive layer, and a second bulking base material in presented order. The total thickness of the second protective film, T2, for use in Comparative Example A4 was 69.696 µm.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body A1-12.

Next, the laminated body A1-12 and the second protective film were laminated such that the surface of the side of the quantum dot-containing layer not irradiated with ionizing radiation of the laminated body A1-12 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Comparative Example A4. The thickness of the quantum dot-containing layer is 50 µm.

### [Example A7]

A wavelength conversion sheet of Example A7 was obtained in the same manner as in Example A3, except that the coating liquid 1 for a quantum dot-containing layer was changed to the following coating liquid 2 for a quantum dot-containing layer.

### <Coating liquid 2 for quantum dot-containing layer>

- Polyfunctional acrylate-based compound 58.11 parts by mass
   (Ethoxylated bisphenol A diacrylate; trade name "ABE-300" of Shin-Nakamura Chemical Co., Ltd.)
- Photopolymerization initiator 3.0 parts by mass
   (Trade name "Omnirad TPO H" of IGM Resins B.V.)
- Quantum dot dispersion liquid prepared in "2" above 1.61 parts by mass
- Acetic acid 0.79 parts by mass
- Titanium oxide 0.25 parts by mass
   (Trade name "Ti-Pure R-706" of The Chemours company; particle size 0.36 µm)

### [Comparative Example A5]

A wavelength conversion sheet of Comparative Example A5 was obtained in the same manner as in Comparative Example A4, except that the coating liquid 1 for a quantum dot-containing layer was changed to the above coating liquid 2 for a quantum dot-containing layer.

### [Comparative Example A6]

### <First protective film>

A surface of a first base material (biaxially stretched PET film having easy adherence layer on one surface, thickness: 12 µm, "EMBLET (registered trademark) PTM" from UNITIKA LTD.) on the side without an easy adherence layer was subjected to plasma treatment in a vacuum deposition apparatus, and aluminum oxide was then vapor-deposited thereon in line by a vacuum vapor deposition method to form an inorganic oxide layer A having a thickness of 8 nm. Next, the above coating liquid for coating layer formation was applied onto the inorganic oxide layer A by gravure printing, and heat-treated at 180°C for 60 seconds to form a coating layer B having a thickness of 180 nm.

Next, a coating liquid 2 for primer layer formation shown later was applied onto the coating layer B by gravure printing, and heat-treated at 80°C for 60 seconds to form a first primer layer having a thickness of 400 nm. The NCO/OH ratio of the coating liquid 2 for primer layer formation was 1.3.

Next, a urethane-based adhesive (manufactured by ROCK PAINT CO., LTD., trade name "RU-004, H-1") was applied onto the surface on the opposite side of the first base material to the surface with the first barrier layer formed thereon by gravure printing, and dried to form a first adhesive layer having a thickness of 4 µm. Next, a first bulking base material (biaxially stretched PET film, thickness: 100 µm) was disposed on the first adhesive layer, and attached under conditions of nip pressure: 0.2 MPa and line speed: 50 m/min.

Through the above operations, a first protective film having the first primer layer, the first barrier layer, the first base material, the first adhesive layer, and the first bulking base material in presented order for use in Comparative Example A6 was obtained. The total thickness of the first protective film, T1, for use in Comparative Example A6 was 116.588 µm.

### <Coating liquid 2 for primer layer formation>

- Acrylic polyol resin 50 parts by mass
- Modified polyisocyanate having acryl group 80 parts by mass
- Silane coupling agent 2.0 parts by mass
   (3-Glycidoxypropyltrimethoxysilane)
- Silica powder 2.0 parts by mass
   (Average particle size: 3 µm)
- Diluting solvent q.s.

### <Second protective film>

The first protective film for use in Comparative Example A6 was used as a second protective film for use in Comparative Example A6. The second protective film has a second primer layer, a second barrier layer, a second base material, a second adhesive layer, and a second bulking base material in presented order. The total thickness of the second protective film, T2, for use in Comparative Example A6 was 116.588 µm.

### <Preparation of wavelength conversion sheet>

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body A1-13.

Next, the laminated body A1-13 and the second protective film were laminated such that the surface of the side of the quantum dot-containing layer not irradiated with ionizing radiation of the laminated body A1-13 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Comparative Example A6. The thickness of the quantum dot-containing layer is 100 µm.

### [Example A8]

### <First protective film>

The laminated body A1-7 was used as a first protective film for use in Example A8. The first protective film has a first primer layer, a first barrier layer, and a first base material in presented order.

### <Second protective film>

An inorganic oxide layer A, a coating layer B, an inorganic oxide layer C, and a coating layer D were formed over a surface of a second base material (biaxially stretched PET film having easy adherence layer on one surface, thickness: 50 µm) on the side without an easy adherence layer in the same manner as for the laminated body A1-1.

Next, the above coating liquid 1 for primer layer formation was applied onto the surface of the easy adherence layer side of the second base material by gravure printing, and heat-treated at 80°C for 60 seconds to form a second primer layer having a thickness of 250 nm.

Through the above operations, a laminated body A1-14 having the second primer layer, the second base material, and the second barrier layer in presented order was obtained. The second barrier layer has the inorganic oxide layer A, the coating layer B, the inorganic oxide layer C, and the coating layer D in presented order from the second base material side. The laminated body A1-14 was used as a second protective film for use in Example A8.

The total thickness of the first protective film, T1, and the total thickness of the second protective film, T2, each protective film being for use in Example A8, were both 50.696 µm.

### <Preparation of wavelength conversion sheet>

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body A1-15.

Next, the laminated body A1-15 and the second protective film were laminated such that the surface of the side of the quantum dot-containing layer not irradiated with ionizing radiation of the laminated body A1-15 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Example A8. The thickness of the quantum dot-containing layer is 40 µm. In the wavelength conversion sheet of Example A8, the layers constituting the first protective film and the layers constituting the second protective film are asymmetrically disposed with respect to the quantum dot-containing layer.

The wavelength conversion sheet of Example A8 and the wavelength conversion sheet of Example A6 are different in layer configuration (the second protective film of Example A8 has a second primer layer, a second base material, and a second barrier layer in presented order; on the other hand, the second protective film of Example A6 has a second primer layer, a second barrier layer, and a second base material in presented order).

**[Table 1]**

| | | Adhesive force (N/25 mm) | | Thickness (µm) | | | TI/T3 | Coating liquid for quantum dot-containing layer | Curling | |
|---|---|---|---|---|---|---|---|---|---|---|
| | | AD1 | AD2 | T1 | T2 | T3 | | | Ave(Max) (mm) | Rank |
| Example | A1 | 6.0 | 3.6 | 119.696 | 12.696 | 50 | 2.39 | 1 | 4.0 | AA |
| | A2 | 6.1 | 3.7 | 94.696 | 12.696 | 50 | 1.89 | 1 | 5.0 | AA |
| | A3 | 6.3 | 3.6 | 69.696 | 12.696 | 50 | 1.39 | 1 | 7.0 | A |
| | A4 | 6.1 | 3.4 | 105.696 | 23.696 | 50 | 2.11 | 1 | 4.0 | AA |
| | A5 | 6.2 | 3.5 | 80.696 | 23.696 | 50 | 1.61 | 1 | 6.0 | A |
| | A6 | 6.4 | 3.4 | 50.696 | 50.696 | 40 | 1.27 | 1 | 8.0 | A- |
| | A7 | 6.0 | 3.6 | 69.696 | 12.696 | 50 | 1.39 | 2 | 7.5 | A |
| | A8 | 6.4 | 3.4 | 50.696 | 50.696 | 40 | 1.27 | 1 | 8.0 | A- |
| Comparative Example | A1 | 6.6 | 3.6 | 12.696 | 12.696 | 50 | 0.25 | 1 | 19.0 | C |
| | A2 | 6.5 | 3.5 | 23.696 | 23.696 | 50 | 0.47 | 1 | 17.0 | C |
| | A3 | 6.7 | 3.1 | 12.696 | 119.696 | 50 | 0.25 | 1 | 17.0 | C |
| | A4 | 6.6 | 3.2 | 12.696 | 69.696 | 50 | 0.25 | 1 | 16.0 | C |
| | A5 | 6.3 | 3.3 | 12.696 | 69.696 | 50 | 0.25 | 2 | 18.0 | C |
| | A6 | 6.1 | 3.7 | 116.588 | 116.588 | 100 | 1.17 | 1 | 13.0 | B |

As demonstrated in Table 1, it can be confirmed that the wavelength conversion sheets of Examples of the first embodiment are capable of suppressing the occurrence of curling.

### <<Examples and Comparative Examples of second embodiment>>

### 4. Measurements and evaluations

The following measurements and evaluations of the wavelength conversion sheets of Examples and Comparative Examples were carried out. Results thereof are shown in Table 2.

### 4-1. Adhesive force

AD 1 and AD2 were determined for the wavelength conversion sheets of Examples and Comparative Examples. Applied was the same measurement method for adhesive force as in "1-1. Adhesive force" for Examples of the first embodiment.

### 4-2. Curling

According to the procedures of X1 to X4 in the text of the present specification, the curling of each of the wavelength conversion sheets of Examples and Comparative Examples was measured. Because the wavelength conversion sheets of Examples and Comparative Examples curled in such a manner that a convex was formed on the first protective film side, only Ave1 was determined, and Ave1 was used as Ave (max). Based on the values of Ave (max), ranking was performed as follows.
AA: Ave (max) was 5.0 mm or less
A: Ave (max) was more than 5.0 mm and 7.5 mm or less
A⁻: Ave (max) was more than 7.5 mm and 10.0 mm or less
B: Ave (max) was more than 10.0 mm and 15.0 mm or less
C: Ave (max) was more than 15.0 mm

### 5. Preparation of quantum dot dispersion liquid

A quantum dot dispersion liquid was prepared in the same manner as in "2. Preparation of quantum dot dispersion liquid" for Examples of the first embodiment.

### 6. Preparation of wavelength conversion sheet

### [Example B1]

### <First protective film>

A surface of a first base material (biaxially stretched PET film having easy adherence layer on one surface, thickness: 12 µm, "EMBLET (registered trademark) PTM" from UNITIKA LTD.) on the side without an easy adherence layer was subjected to plasma treatment in a vacuum deposition apparatus, and aluminum oxide was then vapor-deposited thereon in line by a vacuum vapor deposition method to form an inorganic oxide layer A having a thickness of 8 nm. Next, the coating liquid for coating layer formation shown later was applied onto the inorganic oxide layer A by gravure printing, and heat-treated at 180°C for 60 seconds to form a coating layer B having a thickness of 200 nm. Next, aluminum oxide was vapor-deposited on the coating layer B by a vacuum vapor deposition method to form an inorganic oxide layer C having a thickness of 8 nm. Next, the coating liquid for coating layer formation shown later was applied onto the inorganic oxide layer C by gravure printing, and heat-treated at 180°C for 60 seconds to form a coating layer D having a thickness of 230 nm.

Next, a coating liquid 1 for primer layer formation shown later was applied onto the coating layer D by gravure printing, and heat-treated at 80°C for 60 seconds to form a first primer layer having a thickness of 250 nm.

Through the above operations, a laminated body B1-1 having the first primer layer, the first barrier layer, and the first base material in presented order was obtained. The first barrier layer has the inorganic oxide layer A, the coating layer B, the inorganic oxide layer C, and the coating layer D in presented order from the first base material side.

Next, a two-component curable polyurethane-based adhesive was applied onto one surface of a first bulking base material (biaxially stretched PET film, thickness: 100 µm) by gravure printing, and dried to form a first adhesive layer having a thickness of 7 µm, thereby obtaining a laminated body B1-2 having the first adhesive layer on the first bulking base material.

Next, the surface of the first adhesive layer side of the laminated body B1-2 was superposed on the surface of the first base material side of the laminated body B1-1, and the laminated body B1-1 and the laminated body B1-2 were dry-laminated.

Through the above operations, a first protective film having the first primer layer, the first barrier layer, the first base material, the first adhesive layer, and the first bulking base material in presented order for use in Example B1 was obtained. The total thickness of the first protective film, T1, for use in Example B1 was 119.696 µm.

### <Second protective film>

The laminated body B1-1 was used as a second protective film for use in Example B1. The second protective film has a second primer layer, a second barrier layer, and a second base material in presented order. The total thickness of the second protective film, T2, for use in Example B1 was 12.696 µm.

### <Preparation of wavelength conversion sheet>

A coating liquid 1 for a quantum dot-containing layer having the formulation shown later was applied onto the surface of the first primer layer side of the first protective film, and dried to form a quantum dot-containing layer not irradiated with ionizing radiation, thereby obtaining a laminated body B1-3.

Next, the laminated body B1-3 and the second protective film were laminated such that the surface of the side of the quantum dot-containing layer not irradiated with ionizing radiation of the laminated body B1-3 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Example B1. The thickness of the quantum dot-containing layer is 50 µm.

### <Preparation of coating liquid for coating layer formation>

Prepared was a coating liquid for coating layer formation the same as that for Examples of the first embodiment.

### <Coating liquid 1 for primer layer formation>

Prepared was a coating liquid for primer layer formation the same as the coating liquid 1 for primer layer formation for Examples of the first embodiment.

### <Coating liquid 1 for quantum dot-containing layer>

Prepared was a coating liquid 1 for a quantum dot-containing layer the same as that for Examples of the first embodiment.

### [Example B2]

A wavelength conversion sheet of Example B2 was obtained in the same manner as in Example B1, except that the thickness of the first bulking base material was changed to 75 µm. The total thickness of the first protective film, T1, for use in Example B2 was 94.696 µm. The total thickness of the second protective film, T2, for use in Example B2 was 12.696 µm.

### [Example B3]

A wavelength conversion sheet of Example B3 was obtained in the same manner as in Example B1, except that the thickness of the first bulking base material was changed to 50 µm. The total thickness of the first protective film, T1, for use in Example B3 was 69.696 µm. The total thickness of the second protective film, T2, for use in Example B3 was 12.696 µm.

### [Example B4]

### <First protective film>

A laminated body B1-4 having a first primer layer, a first barrier layer, and a first base material in presented order was obtained in the same manner as in Example B1, except that the first base material was changed to a biaxially stretched PET film having an easy adherence layer on one surface and having a thickness of 23 µm.

Next, a pressure-sensitive adhesive peelable from the first base material was applied onto one surface of a protective base material for the first barrier layer (biaxially stretched PET film, thickness: 75 µm) by gravure printing, and dried to form a peelable first pressure-sensitive adhesive layer having a thickness of 7 µm, thereby obtaining a laminated body B1-5 having the peelable first adhesive layer on the protective base material for the first barrier layer.

Next, the surface of the first pressure-sensitive adhesive layer side of the laminated body B1-5 was superposed on the surface of the first base material side of the laminated body B1-4, and the laminated body B1-4 and the laminated body B1-5 were dry-laminated.

Through the above operations, a first protective film having the first primer layer, the first barrier layer, the first base material, the first pressure-sensitive adhesive layer, and the protective base material for the first barrier layer in presented order for use in Example B4 was obtained. The total thickness of the first protective film, T1, for use in Example B4 was 105.696 µm.

### <Second protective film>

The laminated body B1-4 was used as a second protective film for use in Example B4. The total thickness of the second protective film, T2, for use in Example B4 was 23.696 µm.

### <Preparation of wavelength conversion sheet>

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body B1-6.

Next, the laminated body B1-6 and the second protective film were laminated such that the surface of the side of the quantum dot-containing layer not irradiated with ionizing radiation of the laminated body B1-6 and the surface of the second primer layer side of the second protective film faced each other, and the resultant was then irradiated with an ultraviolet ray to allow the curing of the ionizing radiation curable resin composition of the quantum dot-containing layer to proceed, thereby obtaining a wavelength conversion sheet of Example B4. The thickness of the quantum dot-containing layer is 50 µm.

The peel strength of the protective base material for the first barrier layer in the wavelength conversion sheet of Example B4 was 0.7 N/25 mm. The peel strength indicates the force in peeling the first pressure-sensitive adhesive layer and the protective base material for the first barrier layer from the wavelength conversion sheet.

### [Example B5]

A wavelength conversion sheet of Example B5 was obtained in the same manner as in Example B4, except that the thickness of the protective base material for the first barrier layer was changed to 50 µm. The total thickness of the first protective film, T1, for use in Example B5 was 80.696 µm. The total thickness of the second protective film, T2, for use in Example B5 was 23.696 µm.

The peel strength of the protective base material for the first barrier layer in the wavelength conversion sheet of Example B5 was 0.8 N/25 mm. The peel strength indicates the force in peeling the first pressure-sensitive adhesive layer and the protective base material for the first barrier layer from the wavelength conversion sheet.

### [Comparative Example B1]

The laminated body B1-1 was used as a first protective film for use in Comparative Example B1. The first protective film has a first primer layer, a first barrier layer, and a first base material in presented order. The laminated body B1-1 was used as a second protective film for use in Comparative Example B1. The second protective film has a second primer layer, a second barrier layer, and a second base material in presented order. The total thickness of the first protective film, T1, and the total thickness of the second protective film, T2, each protective film being for use in Comparative Example B1, were both 12.696 µm.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body B1-7.

Next, the laminated body B1-7 and the second protective film were laminated such that the surface of the side of the quantum dot-containing layer not irradiated with ionizing radiation of the laminated body B1-7 and the surface of the second primer layer side of the second protective film faced each other, and the resultant was then irradiated with an ultraviolet ray to allow the curing of the ionizing radiation curable resin composition of the quantum dot-containing layer to proceed, thereby obtaining a wavelength conversion sheet of Comparative Example B1. The thickness of the quantum dot-containing layer is 50 µm.

### [Comparative Example B2]

The laminated body B1-4 was used as a first protective film for use in Comparative Example B2. The first protective film has a first primer layer, a first barrier layer, and a first base material in presented order. The laminated body B1-4 is used as a second protective film for use in Comparative Example B2. The second protective film has a second primer layer, a second barrier layer, and a second base material in presented order. The total thickness of the first protective film, T1, and the total thickness of the second protective film, T2, each protective film being for use in Comparative Example B2, were both 23.696 µm.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body B1-8.

Next, the laminated body B1-8 and the second protective film were laminated such that the surface of the side of the quantum dot-containing layer not irradiated with ionizing radiation of the laminated body B1-8 and the surface of the second primer layer side of the second protective film faced each other, and the resultant was then irradiated with an ultraviolet ray to allow the curing of the ionizing radiation curable resin composition of the quantum dot-containing layer to proceed, thereby obtaining a wavelength conversion sheet of Comparative Example B2. The thickness of the quantum dot-containing layer is 50 µm.

### [Comparative Example B3]

The second protective film for use in Example B1 was used as a first protective film for use in Comparative Example B3. The first protective film has a first primer layer, a first barrier layer, and a first base material in presented order. The total thickness of the first protective film, T1, for use in Comparative Example B3 was 12.696 µm.

The first protective film for use in Example B1 was used as a second protective film for use in Comparative Example B3. The second protective film has a second primer layer, a second barrier layer, a second base material, a second adhesive layer, and a second bulking base material in presented order. The total thickness of the second protective film, T2, for use in Comparative Example B3 was 119.696 µm.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body B1-9.

Next, the laminated body B1-9 and the second protective film were laminated such that the surface of the side of the quantum dot-containing layer not irradiated with ionizing radiation of the laminated body B1-9 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Comparative Example B3. The thickness of the quantum dot-containing layer is 50 µm.

### [Comparative Example B4]

The second protective film for use in Example B3 was used as a first protective film for use in Comparative Example B4. The first protective film has a first primer layer, a first barrier layer, and a first base material in presented order. The total thickness of the first protective film, T1, for use in Comparative Example B4 was 12.696 µm.

The first protective film for use in Example B3 was used as a second protective film for use in Comparative Example B4. The second protective film has a second primer layer, a second barrier layer, a second base material, a second adhesive layer, and a second bulking base material in presented order. The total thickness of the second protective film, T2, for use in Comparative Example B4 was 69.696 µm.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body B1-10.

Next, the laminated body B1-10 and the second protective film were laminated such that the surface of the side of the quantum dot-containing layer not irradiated with ionizing radiation of the laminated body B1-10 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Comparative Example B4. The thickness of the quantum dot-containing layer is 50 µm.

### [Example B6]

A wavelength conversion sheet of Example B6 was obtained in the same manner as in Example B3, except that the coating liquid 1 for a quantum dot-containing layer was changed to the following coating liquid 2 for a quantum dot-containing layer.

### <Coating liquid 2 for quantum dot-containing layer>

Prepared was a coating liquid 2 for a quantum dot-containing layer the same as that for Examples of the first embodiment.

### [Comparative Example B5]

A wavelength conversion sheet of Comparative Example B5 was obtained in the same manner as in Comparative Example B4, except that the coating liquid 1 for a quantum dot-containing layer was changed to the above coating liquid 2 for a quantum dot-containing layer.

### [Example B7]

### <First protective film>

A laminated body B1-11 was obtained in the same manner as for the laminated body B1-1, except that the first base material was changed to a biaxially stretched PET film having an easy adherence layer on one surface and having a thickness of 50 µm. The laminated body B1-11 has a first primer layer, a first barrier layer, and a first base material in presented order. Then, the laminated body B1-11 was used as a first protective film for use in Example B7. The total thickness of the first protective film, T1, for use in Example B7 was 50.696 µm.

### <Second protective film>

The laminated body B1-4 was used as a second protective film for use in Example B7. The total thickness of the second protective film, T2, for use in Example B7 was 23.696 µm.

### <Preparation of wavelength conversion sheet>

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body B1-12.

Next, the laminated body B1-12 and the second protective film were laminated such that the surface of the side of the quantum dot-containing layer not irradiated with ionizing radiation of the laminated body B1-12 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Example B7. The thickness of the quantum dot-containing layer is 40 µm.

### [Example B8]

### <First protective film>

The first protective film for use in Example B7 was used as a first protective film for use in Example B8. The first protective film has a first primer layer, a first barrier layer, and a first base material in presented order. The total thickness of the first protective film, T1, for use in Example B8 was 50.696 µm.

### <Second protective film>

An inorganic oxide layer A, a coating layer B, an inorganic oxide layer C, and a coating layer D were formed over a surface of a second base material (biaxially stretched PET film having easy adherence layer on one surface, thickness: 23 µm) on the side without an easy adherence layer in the same manner as for the laminated body B1-1.

Next, the above coating liquid 1 for primer layer formation was applied onto the surface of the easy adherence layer side of the second base material by gravure printing, and heat-treated at 80°C for 60 seconds to form a second primer layer having a thickness of 250 nm.

Through the above operations, a laminated body B1-13 having the second primer layer, the second base material, and the second barrier layer in presented order was obtained. The second barrier layer has the inorganic oxide layer A, the coating layer B, the inorganic oxide layer C, and the coating layer D in presented order from the second base material side. The laminated body B1-13 was used as a second protective film for use in Example B8. The total thickness of the second protective film, T2, for use in Example B8 was 23.696 µm.

### <Preparation of wavelength conversion sheet>

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body B1-14.

Next, the laminated body B1-14 and the second protective film were laminated such that the surface of the side of the quantum dot-containing layer not irradiated with ionizing radiation of the laminated body B1-14 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Example B8. The thickness of the quantum dot-containing layer is 40 µm. In the wavelength conversion sheet of Example B8, the layers constituting the first protective film and the layers constituting the second protective film are asymmetrically disposed with respect to the quantum dot-containing layer.

The wavelength conversion sheet of Example B8 and the wavelength conversion sheet of Example B7 are different in layer configuration (the second protective film of Example B8 has a second primer layer, a second base material, and a second barrier layer in presented order; on the other hand, the second protective film of Example B7 has a second primer layer, a second barrier layer, and a second base material in presented order).

**[Table 2]**

| | | Adhesive force (N/25mm) | | Thickness (µm) | | | Coating liquid for quantum dot-containing layer | Curling | |
|---|---|---|---|---|---|---|---|---|---|
| | | AD1 | AD2 | T1 | T2 | T3 | | Ave(Max) (mm) | Rank |
| Example | B1 | 6.0 | 3.6 | 119.696 | 12.696 | 50 | 1 | 4.0 | AA |
| | B2 | 6.1 | 3.7 | 94.696 | 12.696 | 50 | 1 | 5.0 | AA |
| | B3 | 6.3 | 3.6 | 69.696 | 12.696 | 50 | 1 | 7.0 | A |
| | B4 | 6.1 | 3.4 | 105.696 | 23.696 | 50 | 1 | 4.0 | AA |
| | B5 | 6.2 | 3.5 | 80.696 | 23.696 | 50 | 1 | 6.0 | A |
| | B6 | 6.0 | 3.6 | 69.696 | 12.696 | 50 | 2 | 7.5 | A |
| | B7 | 6.0 | 3.6 | 50.696 | 23.696 | 40 | 1 | 7.0 | A |
| | B8 | 6.0 | 3.6 | 50.696 | 23.696 | 40 | 1 | 7.0 | A |
| Comparative Example | B1 | 6.6 | 3.6 | 12.696 | 12.696 | 50 | 1 | 19.0 | C |
| | B2 | 6.5 | 3.5 | 23.696 | 23.696 | 50 | 1 | 17.0 | C |
| | B3 | 6.7 | 3.1 | 12.696 | 119.696 | 50 | 1 | 17.0 | C |
| | B4 | 6.6 | 3.2 | 12.696 | 69.696 | 50 | 1 | 16.0 | C |
| | B5 | 6.3 | 3.3 | 12.696 | 69.696 | 50 | 2 | 18.0 | C |

As demonstrated in Table 2, it can be confirmed that the wavelength conversion sheets of Examples of the second embodiment are capable of suppressing the occurrence of curling.

### <<Examples and Comparative Examples of third embodiment>>

### 7. Measurements and evaluations

The following measurements and evaluations of the wavelength conversion sheets of Examples and Comparative Examples were carried out. Results thereof are shown in Table 3.

### 7-1. Adhesive force

AD1 and AD2 were determined for the wavelength conversion sheets of Examples and Comparative Examples. Applied was the same measurement method for adhesive force as in "1-1. Adhesive force" for Examples of the first embodiment.

### 7-2. Curling

According to the procedures of X1 to X4 in the text of the present specification, the curling of each of the wavelength conversion sheets of Examples and Comparative Examples was measured. Because the wavelength conversion sheets of Examples and Comparative Examples curled in such a manner that a convex was formed on the first protective film side, only Ave1 was determined, and Ave1 was used as Ave (max). Based on the values of Ave (max), ranking was performed as follows.
AA: Ave (max) was 5.0 mm or less
A: Ave (max) was more than 5.0 mm and 7.5 mm or less
A⁻: Ave (max) was more than 7.5 mm and 10.0 mm or less
B: Ave (max) was more than 10.0 mm and 15.0 mm or less
C: Ave (max) was more than 15.0 mm

### 7-3. Color gamut

### <Providing direct-lit type backlight for measurement>

A commercially available liquid crystal display television (manufactured by VIZIO, Inc., PQ65-F1) including a direct-lit type backlight was decomposed to remove the direct-lit type backlight. The direct-lit type backlight is equipped with a direct-lit type blue LED having an emission central wavelength of 450 nm and a full width at half maximum of 20 nm as a light source. On the light going-out side of the light source, a light diffusing plate, a wavelength conversion sheet including a quantum dot-containing layer, a prism sheet, and a reflective polarizing plate (brightness enhancement film, manufactured by 3M, DBEF (registered trademark)) are disposed in presented order. In addition, a reflective sheet is provided on the opposite side of the light source from the light going-out side.

The wavelength conversion sheet in the direct-lit type backlight was changed to any one of the wavelength conversion sheets of Examples and Comparative Examples to obtain a "direct-lit type backlight for color gamut measurement". Before incorporating in the direct-lit type backlight, each of the wavelength conversion sheets of Examples and Comparative Examples was exposed to an atmosphere at a temperature of 23°C ± 5°C and a relative humidity of 40% or more and 65% or less for 30 minutes or more.

### <Measurement of chromaticity>

The chromaticity of the direct-lit type backlight for color gamut measurement in displaying red color, that in displaying blue color, and that in displaying green color were measured by using a spectroradiometer (trade name: SR-3AR) manufactured by TOPCON TECHNOHOUSE CORPORATION. The measurement environment was a dark room. The measurement was carried out from the front direction 500 mm apart from the backlight. The measurement environment was at a temperature of 23°C ± 5°C and a relative humidity of 40% or more and 65% or less.

### <Calculation of color gamut>

Area A: the area of a triangle formed by linking three chromaticity coordinates in displaying red color, in displaying blue color, and in displaying green color.

Area B: the area of an overlapping region between the area A and the color gamut standard DCI-P3. $" \left(The area B/the area A\right) \times 100 " was determined as the color gamut \left(%\right) .$ Based on the values of color gamut, ranking was performed as follows.
A: a color gamut of 85% or more
C: a color gamut of less than 85%

### 7-4. Thinness

A case that the total of T1, T2, and T3 was 150 µm or less was rated as "A", and a case that the total was more than 150 µm as "C".

### 8. Preparation of quantum dot dispersion liquid

A quantum dot dispersion liquid was prepared in the same manner as in "2. Preparation of quantum dot dispersion liquid" for Examples of the first embodiment.

### 9. Preparation of wavelength conversion sheet

### [Example C1]

### <First protective film>

A surface of a first base material (biaxially stretched PET film having easy adherence layer on one surface, thickness: 12 µm, "EMBLET (registered trademark) PTM" from UNITIKA LTD.) on the side without an easy adherence layer was subjected to plasma treatment in a vacuum deposition apparatus, and aluminum oxide was then vapor-deposited thereon in line by a vacuum vapor deposition method to form an inorganic oxide layer A having a thickness of 8 nm. Next, a coating liquid for coating layer formation shown later was applied onto the inorganic oxide layer A by gravure printing, and heat-treated at 180°C for 60 seconds to form a coating layer B having a thickness of 200 nm. Next, aluminum oxide was vapor-deposited on the coating layer B by a vacuum vapor deposition method to form an inorganic oxide layer C having a thickness of 8 nm. Next, the coating liquid for coating layer formation shown later was applied onto the inorganic oxide layer C by gravure printing, and heat-treated at 180°C for 60 seconds to form a coating layer D having a thickness of 230 nm.

Next, a coating liquid 1 for primer layer formation shown later was applied onto the coating layer D by gravure printing, and heat-treated at 80°C for 60 seconds to form a first primer layer having a thickness of 250 nm.

Through the above operations, a laminated body C1-1 having the first primer layer, the first barrier layer, and the first base material in presented order was obtained. The first barrier layer has the inorganic oxide layer A, the coating layer B, the inorganic oxide layer C, and the coating layer D in presented order from the first base material side.

Next, a two-component curable polyurethane-based adhesive was applied onto one surface of a first bulking base material (biaxially stretched PET film, thickness: 50 µm) by gravure printing, and dried to form a first adhesive layer having a thickness of 7 µm, thereby obtaining a laminated body C1-2 having the first adhesive layer on the first bulking base material.

Next, the surface of the first adhesive layer side of the laminated body C1-2 was superposed on the surface of the first base material side of the laminated body C1-1, and the laminated body C1-1 and the laminated body C1-2 were dry-laminated.

Through the above operations, a first protective film having the first primer layer, the first barrier layer, the first base material, the first adhesive layer, and the first bulking base material in presented order for use in Example C1 was obtained. The total thickness of the first protective film, T1, for use in Example C1 was 69.696 µm.

### <Second protective film>

The laminated body C1-1 was used as a second protective film for use in Example C1. The second protective film has a second primer layer, a second barrier layer, and a second base material in presented order. The total thickness of the second protective film, T2, for use in Example C1 was 12.696 µm.

### <Preparation of wavelength conversion sheet>

A coating liquid 1 for a quantum dot-containing layer having the formulation shown later was applied onto the surface of the first primer layer side of the first protective film, and dried to form a quantum dot-containing layer not irradiated with ionizing radiation, thereby obtaining a laminated body C1-3.

Next, the laminated body C1-3 and the second protective film were laminated such that the surface of the side of the quantum dot-containing layer not irradiated with ionizing radiation of the laminated body C1-3 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Example C1. The thickness of the quantum dot-containing layer is 50 µm.

### <Preparation of coating liquid for coating layer formation>

Prepared was a coating liquid for coating layer formation the same as that for Examples of the first embodiment.

### <Coating liquid 1 for primer layer formation>

Prepared was a coating liquid for primer layer formation the same as the coating liquid 1 for primer layer formation for Examples of the first embodiment.

### <Coating liquid 1 for quantum dot-containing layer>

Prepared was a coating liquid 1 for a quantum dot-containing layer the same as that for Examples of the first embodiment.

### [Example C2]

A laminated body C1-4 having a first primer layer, a first barrier layer, and a first base material in presented order was obtained in the same manner as for the laminated body C1-1, except that the first base material was changed to a biaxially stretched PET film having an easy adherence layer on one surface and having a thickness of 50 µm. Then, the laminated body C1-4 was used as a first protective film for use in Example C2.

The laminated body C1-4 was also used as a second protective film for use in Example C2. The second protective film has a second primer layer, a second barrier layer, and a second base material in presented order.

The total thickness of the first protective film, T1, and the total thickness of the second protective film, T2, each protective film being for use in Example C2, were both 50.696 µm.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body C1-5.

Next, the laminated body C1-5 and the second protective film were laminated such that the surface of the side of the quantum dot-containing layer not irradiated with ionizing radiation of the laminated body C1-5 and the surface of the second primer layer side of the second protective film faced each other, and the resultant was then irradiated with an ultraviolet ray to allow the curing of the ionizing radiation curable resin composition of the quantum dot-containing layer to proceed, thereby obtaining a wavelength conversion sheet of Example C2. The thickness of the quantum dot-containing layer is 40 µm.

### [Comparative Example C1]

A wavelength conversion sheet of Comparative Example C1 was obtained in the same manner as in Example C1, except that the thickness of the first bulking base material was changed to 75 µm. The total thickness of the first protective film, T1, for use in Comparative Example C1 was 94.696 µm. The total thickness of the second protective film, T2, for use in Comparative Example C1 was 12.696 µm.

### [Comparative Example C2]

The second protective film for use in Example C1 was used as a first protective film for use in Comparative Example C2. The first protective film has a first primer layer, a first barrier layer, and a first base material in presented order. The total thickness of the first protective film, T1, for use in Comparative Example C2 was 12.696 µm.

A first protective film given by changing the thickness of the first bulking base material in the first protective film for use in Example C1 to 100 µm was used as a second protective film for use in Comparative Example C2. The second protective film has a second primer layer, a second barrier layer, a second base material, a second adhesive layer, and a second bulking base material in presented order. The total thickness of the second protective film, T2, for use in Comparative Example C2 was 119.696 µm.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body C1-6.

Next, the laminated body C1-6 and the second protective film were laminated such that the surface of the side of the quantum dot-containing layer not irradiated with ionizing radiation of the laminated body C1-6 and the surface of the second primer layer side of the second protective film faced each other, and the resultant was then irradiated with an ultraviolet ray to allow the curing of the ionizing radiation curable resin composition of the quantum dot-containing layer to proceed, thereby obtaining a wavelength conversion sheet of Comparative Example C2. The thickness of the quantum dot-containing layer is 50 µm.

### [Comparative Example C3]

A wavelength conversion sheet of Comparative Example C3 was obtained in the same manner as in Comparative Example C2, except that the thickness of the second bulking base material was changed from 100 µm to 50 µm. The total thickness of the first protective film, T1, for use in Comparative Example C3 was 12.696 µm. The total thickness of the second protective film, T2, for use in Comparative Example C3 was 69.696 µm.

### [Example C3]

A wavelength conversion sheet of Example C3 was obtained in the same manner as in Example C1, except that the coating liquid 1 for a quantum dot-containing layer was changed to the following coating liquid 2 for a quantum dot-containing layer.

### <Coating liquid 2 for a quantum dot-containing layer>

Prepared was a coating liquid 2 for a quantum dot-containing layer the same as that for Examples of the first embodiment.

### [Comparative Example C4]

A wavelength conversion sheet of Comparative Example C4 was obtained in the same manner as in Comparative Example C3, except that the coating liquid 1 for a quantum dot-containing layer was changed to the above coating liquid 2 for a quantum dot-containing layer.

### [Example C4]

The laminated body C1-4 was used as a first protective film for use in Example C4. The first protective film has a first primer layer, a first barrier layer, and a first base material in presented order.

A laminated body C1-7 was obtained in the same manner as for the laminated body C1-1, except that the first base material was changed to a biaxially stretched PET film having an easy adherence layer on one surface and having a thickness of 23 µm. The laminated body C1-7 was used as a second protective film for use in Example C4. The total thickness of the second protective film, T2, for use in Example C4 was 23.696 µm.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body C1-8.

Next, the laminated body C1-8 and the second protective film were laminated such that the surface of the side of the quantum dot-containing layer not irradiated with ionizing radiation of the laminated body C1-8 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Example C4. The thickness of the quantum dot-containing layer is 30 µm.

### [Comparative Example C5]

The laminated body C1-4 was used as a first protective film for use in Comparative Example C5. The first protective film has a first primer layer, a first barrier layer, and a first base material in presented order.

The laminated body C1-4 was also used as a second protective film for use in Comparative Example C5. The second protective film has a second primer layer, a second barrier layer, and a second base material in presented order.

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body C1-9.

Next, the laminated body C1-9 and the second protective film were laminated such that the surface of the side of the quantum dot-containing layer not irradiated with ionizing radiation of the laminated body C1-9 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Comparative Example C5. The thickness of the quantum dot-containing layer is 100 µm.

### [Example C5]

### <First protective film>

The laminated body C1-4 was used as a first protective film for use in Example C5. The first protective film has a first primer layer, a first barrier layer, and a first base material in presented order.

### <Second protective film>

An inorganic oxide layer A, a coating layer B, an inorganic oxide layer C, and a coating layer D were formed over a surface of a second base material (biaxially stretched PET film having easy adherence layer on one surface, thickness: 50 µm) on the side without an easy adherence layer in the same manner as for the laminated body C1-1.

Next, the above coating liquid 1 for primer layer formation was applied onto the surface of the easy adherence layer side of the second base material by gravure printing, and heat-treated at 80°C for 60 seconds to form a second primer layer having a thickness of 250 nm.

Through the above operations, a laminated body C1-10 having the second primer layer, the second base material, and the second barrier layer in presented order was obtained. The second barrier layer has the inorganic oxide layer A, the coating layer B, the inorganic oxide layer C, and the coating layer D in presented order from the second base material side. The laminated body C1-10 was used as a second protective film for use in Example C5.

The total thickness of the first protective film, T1, and the total thickness of the second protective film, T2, each protective film being for use in Example C5, were both 50.696 µm.

### <Preparation of wavelength conversion sheet>

A coating liquid 1 for a quantum dot-containing layer having the above formulation was applied onto the surface of the first primer layer side of the first protective film, and dried to form a quantum dot-containing layer not irradiated with ionizing radiation, thereby obtaining a laminated body C1-11.

Next, the laminated body C1-11 and the second protective film were laminated such that the surface of the side of the quantum dot-containing layer not irradiated with ionizing radiation of the laminated body C1-11 and the surface of the second primer layer side of the second protective film faced each other, and the resultant was then irradiated with an ultraviolet ray to allow the curing of the ionizing radiation curable resin composition of the quantum dot-containing layer to proceed to obtain a wavelength conversion sheet of Example C5. The thickness of the quantum dot-containing layer is 40 µm. In the wavelength conversion sheet of Example C5, the layers constituting the first protective film and the layers constituting the second protective film are asymmetrically disposed with respect to the quantum dot-containing layer.

The wavelength conversion sheet of Example C5 and the wavelength conversion sheet of Example C2 are different in layer configuration (the second protective film of Example C5 has a second primer layer, a second base material, and a second barrier layer in presented order; on the other hand, the second protective film of Example C2 has a second primer layer, a second barrier layer, and a second base material in presented order).

**[Table 3]**

| | | Adhesive force (N/25mm) | | Thickness (µm) | | | | T1/(T1+T2+T3) | Coating liquid for quantum dot-containing layer | Curling | | Color gamut | Thinness |
|---|---|---|---|---|---|---|---|---|---|---|---|---|---|
| | | AD1 | AD2 | T1 | T2 | T3 | T1+T2+T3 | | | Ave(Max) (mm) | Rank | | |
| Example | C1 | 6.3 | 3.6 | 69.696 | 12.696 | 50 | 132.392 | 0.526 | 1 | 7.0 | A | A | A |
| | C2 | 6.4 | 3.4 | 50.696 | 50.696 | 40 | 141.392 | 0.359 | 1 | 8.0 | A⁻ | A | A |
| | C3 | 6.0 | 3.6 | 69.696 | 12.696 | 50 | 132.392 | 0.526 | 2 | 7.5 | A | A | A |
| | C4 | 6.0 | 3.5 | 50.696 | 23.696 | 30 | 104.392 | 0.486 | 1 | 7.0 | A | A | A |
| | C5 | 6.4 | 3.4 | 50.696 | 50.696 | 40 | 141.392 | 0.359 | 1 | 8.0 | A⁻ | A | A |
| Comparative Example | C1 | 6.1 | 3.6 | 94.696 | 12.696 | 50 | 157.392 | 0.602 | 1 | 5.0 | AA | A | C |
| | C2 | 6.7 | 3.1 | 12.696 | 119.696 | 50 | 182.392 | 0.070 | 1 | 17.0 | C | A | C |
| | C3 | 6.6 | 3.2 | 12.696 | 69.696 | 50 | 132.392 | 0.096 | 1 | 16.0 | C | A | A |
| | C4 | 6.3 | 3.3 | 12.696 | 69.696 | 50 | 132.392 | 0.096 | 2 | 18.0 | C | A | A |
| | C5 | 6.0 | 3.7 | 50.696 | 50.696 | 100 | 201.392 | 0.252 | 1 | 15.0 | C | A | C |

As demonstrated in Table 3, it can be confirmed that the wavelength conversion sheets of Examples of the third embodiment are capable of suppressing curling and suppressing the narrowing of the color gamut in combination with achievement of thinness.

### Reference Signs List

10: First quantum dot protective film
11: First primer layer
12: First base material
13: First barrier layer
14: First adhesive layer
15: First bulking base material
20: Second quantum dot protective film
21: Second primer layer
22: Second base material
23: Second barrier layer
30: Quantum dot-containing layer
200: Wavelength conversion sheet
201: Sample prepared from wavelength conversion sheet
210: Light source
220: Optical plate
221: Light guide plate
222: Diffusing plate
230: Reflector
240: Prism sheet
300: Backlight
301: Edge-lit type backlight
302: Direct-lit type backlight
500: Horizontal stage

## Claims

1. A wavelength conversion sheet comprising: a first quantum dot protective film; a quantum dot-containing layer; and a second quantum dot protective film in presented order, wherein
the first quantum dot protective film comprises at least a first primer layer, a first base material, and a first barrier layer,
the second quantum dot protective film comprises at least a second primer layer, a second base material, and a second barrier layer,
the first primer layer and the second primer layer are each in contact with the quantum dot-containing layer,
AD2 < AD1 is satisfied, wherein AD1 is defined as an adhesive force between the first quantum dot protective film and the quantum dot-containing layer and AD2 is defined as an adhesive force between the second quantum dot protective film and the quantum dot-containing layer, and
T1/T3 is 1.20 or more, wherein T1 is defined as a total thickness of the first quantum dot protective film and T3 is defined as a thickness of the quantum dot-containing layer.

2. The wavelength conversion sheet according to claim 1, wherein the quantum dot-containing layer contains a cured product of a curable resin composition.

3. The wavelength conversion sheet according to claim 1, wherein T1 is 50 µm or more and 140 µm or less.

4. The wavelength conversion sheet according to claim 1, wherein T3 is 15 µm or more and 60 µm or less.

5. The wavelength conversion sheet according to claim 1, wherein T1/T3 is 1.25 or more and 5.00 or less.

6. The wavelength conversion sheet according to claim 1, wherein T2 ≤ T3 is satisfied, wherein T2 is defined as a total thickness of the second quantum dot protective film.

7. The wavelength conversion sheet according to claim 1, wherein the first quantum dot protective film further comprises a first bulking base material.

8. The wavelength conversion sheet according to claim 1, wherein the first quantum dot protective film further comprises a protective base material for the first barrier layer.

9. The wavelength conversion sheet according to claim 1, wherein the first barrier layer and the second barrier layer each comprise an inorganic oxide layer and a coating layer.

10. A backlight comprising: at least one light source that emits primary light; an optical plate that is disposed adjacent to the light source and is for light guiding or diffusion; and a wavelength conversion sheet disposed on a light going-out side of the optical plate, wherein the wavelength conversion sheet is the wavelength conversion sheet according to any one of claims 1 to 9.

11. A liquid crystal display device comprising a backlight and a liquid crystal panel, wherein the backlight is the backlight according to claim 10.
